(19) Europäisches Patentamt
European Patent Office
Office européen des brevets

(11) EP 3 131 987 B1

(12) # EUROPÄISCHE PATENTSCHRIFT

(45) Veröffentlichungstag und Bekanntmachung des Hinweises auf die Patenterteilung:
**16.05.2018 Patentblatt 2018/20**

(21) Anmeldenummer: **15708530.9**

(22) Anmeldetag: **10.03.2015**

(51) Int Cl.:
***C09D 167/08*** *(2006.01)* ***C08K 3/22*** *(2006.01)*
***C09D 7/12*** *(2006.01)* ***C09D 7/14*** *(2006.01)*

(86) Internationale Anmeldenummer:
**PCT/EP2015/054885**

(87) Internationale Veröffentlichungsnummer:
**WO 2015/158466 (22.10.2015 Gazette 2015/42)**

(54) **ZUSAMMENSETZUNG AUF BASIS VON SCHICHTFÖRMIGEN HYDROXIDEN UND POLYESTERN, VERFAHREN ZUR HERSTELLUNG DER ZUSAMMENSETZUNG UND DESSEN VERWENDUNG**

COMPOSITION BASED ON LAYERED HYDROXIDES AND POLYESTERS, METHOD FOR PREPARING THE COMPOSITION AND ITS USE

COMPOSITION À BASE D'HYDROXYDES ET DE POLYESTERS EN FORME DE COUCHE, PROCÉDÉ DE FABRICATION DE LA COMPOSITION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2014 EP 14164991**

(43) Veröffentlichungstag der Anmeldung:
**22.02.2017 Patentblatt 2017/08**

(73) Patentinhaber:
- **BASF Coatings GmbH**
  **48165 Münster (DE)**
- **Université Blaise Pascal - Clermont-Ferrand II**
  **63006 Clermont-Ferrand Cedex (FR)**

(72) Erfinder:
- **HINTZE-BRÜNING, Horst**
  **48317 Drensteinfurt (DE)**
- **AUSTRUP, Elke**
  **59394 Nordkirchen (DE)**
- **LEROUX, Fabrice**
  **F-63670 Les Cendre (FR)**
- **STIMPFLING, Thomas**
  **F-33700 Merignac (FR)**
- **SWANSON, Claudia**
  **38678 Clausthal-Zellerfeld (DE)**
- **LANGRY, Arthur**
  **F-63000 Clermont-Ferrand (FR)**
- **KÖNIG, Andrej**
  **48153 Münster (DE)**

(74) Vertreter: **BASF IP Association**
**BASF SE**
**G-FLP-C006**
**67056 Ludwigshafen (DE)**

(56) Entgegenhaltungen:
**WO-A1-2010/130309**
**US-A1- 2010 311 880**
**US-A1- 2011 288 219**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 131 987 B1

Printed by Jouve, 75001 PARIS (FR)

## Beschreibung

Die vorliegende Erfindung betrifft neue Zusammensetzungen auf Basis von schichtförmigen Hydroxiden und Polyestern. Zudem betrifft die vorliegende Erfindung die Herstellung solcher Zusammensetzungen und die Verwendung der Zusammensetzung in beziehungsweise als Beschichtungsmittel. Die neuen Zusammensetzungen enthalten schichtförmige Hydroxide in feinverteilter Form und ohne übermäßige Aggregation. Dies bedeutet, dass die vorteilhaften Eigenschaften von schichtförmigen Hydroxiden in Beschichtungsmitteln, beispielsweise die Verbesserung von Korrosionsschutz und/oder Steinschlagfestigkeit, genutzt werden können, ohne dass andere nachteilige Eigenschaften, insbesondere eine durch Aggregatbildung verursachte Inhomogenität im Beschichtungsfilm, resultiert.

## Stand der Technik

Schichtförmige Hydroxide, verschiedene anwendungstechnische Eigenschaften dieser schichtförmigen Hydroxide sowie deren Einsatz in Beschichtungsmitteln, beispielsweise Lacken, sind bekannt. Zu den schichtförmigen Hydroxiden zählt man insbesondere die schichtförmigen Doppelhydroxide (englisch: "layered double hydroxide", im Folgenden verwendete Abkürzung: LDH) sowie die schichtförmigen Einfachhydroxide (englisch: "layered single hydroxide", im Folgenden verwendete Abkürzung: LSH).

Eine relevante Gruppe von LDH wird in der Literatur häufig durch die idealisierte allgemeine Formel $[M2^{2+}_{(1-x)} M3^{3+}_{x}(OH)_2]^{x+} [A^{y-}_{(x/y)} \cdot nH_2O]$ oder ähnliche Summenformeln beschrieben. Darin steht M2 für zweiwertige metallische Kationen, M3 für dreiwertige metallische Kationen und A für Anionen der Valenz x. Bei den natürlich vorkommenden LDH handelt es sich hierbei in der Regel um anorganische Anionen wie Karbonat, Chlorid, Nitrat, Hydroxid, und/oder Bromid. Die gängigsten Anionen sind Karbonat, Sulfat, Chlorid und Hydroxid. Bekannt sind auch LDH enthaltend Sulfid und $[Sb(OH)_6]^-$ (vergleiche Mineralogical Magazine, October 2012, v. 76, p. 1289). Auch verschiedene weitere anorganische sowie organische Anionen können insbesondere in synthetischen, weiter unten beschriebenen LDH vorhanden sein. Zudem wird in obiger allgemeiner Formel das vorhandene Kristallwasser berücksichtigt. Eine bekannte Klasse von LDH sind die Hydrotalkite. Bei den Hydrotalkiten ist als zweiwertiges Kation $Mg^{2+}$, als dreiwertiges Kation $Al^{3+}$ und als Anion grundsätzlich Karbonat vorhanden. Insbesondere in synthetischen Hydrotalkiten kann das Karbonat zumindest anteilig durch Hydroxidionen oder andere anorganische und auch organische Anionen substituiert sein. Hydrotalkite beziehungsweise LDH haben eine schichtartige Struktur ähnlich dem Brucit ($Mg(OH)_2$), wobei jeweils zwischen zwei anorganischen, aufgrund der anteilig vorhandenen dreiwertigen Metallkationen positiv geladenen Metallhydroxidschichten eine negativ geladene Schicht von interkalierten Anionen liegt, welche in der Regel zusätzlich Kristallwasser enthält. Es handelt sich also um alternierend positiv und negativ geladene Schichten, die durch entsprechende ionische Wechselwirkungen eine Schichtstruktur ausbilden. Die LDH- Schichtstruktur findet in der oben gezeigten Formel durch die entsprechend gesetzten Klammern Berücksichtigung. Herstellmethoden von LDH, beispielsweise die direkte Kopräzipitationsmethode, sind dem Fachmann bekannt und werden auch weiter unten beschrieben.

Ebenfalls bekannt sind beispielsweise synthetische LDH, in denen anstelle einer Kombination von zweiwertigen und dreiwertigen metallischen Kationen eine Kombination von einwertigen metallischen Kationen (beispielsweise $Li^+$) und dreiwertigen metallischen Kationen (beispielsweise $Al^{3+}$) in den Metallhydroxidschichten vorhanden ist. Auch diese LDH lassen sich beispielsweise über die schon genannte Kopräzipitationsmethode herstellen, nämlich über die Kopräzipitation aus Aluminiumhydroxid (Gibbsite oder Bayerite) in Gegenwart von Lithiumsalzen in wässrigem Medium. Ihre Struktur ähnelt den schon genannten Hydrotalkiten hinsichtlich der positiv geladenen Metallhydroxidschichten und den negativ geladenen Zwischenschichten. Ein bekannter Vertreter dieser LDH lässt sich über die Formel $[LiAl_2(OH)_6]^+ [A^- \cdot nH_2O]$ beschreiben. Hierbei füllen Lithiumkationen die unbesetzten Gitterplätze im schichtförmigen Aluminiumhydroxid. Hieraus resultiert eine entsprechende positive Schichtladung die durch Anionen kompensiert wird. Letztere befinden sich interkaliert zwischen den positiv geladenen Metallhydroxidschichten.

Bei den LSH handelt es sich bekanntermaßen um den LDH verwandte Schichtstrukturkomponenten, die allerdings nicht zwei metallische Kationen mit unterschiedlichen Wertigkeiten in den anorganischen Metallhydroxidschichten aufweisen, sondern die lediglich zweiwertige metallische Kationen als kationische Komponente besitzen. Der oben beschriebene positive Ladungsüberschuss, der bei den LDH durch die dreiwertigen metallischen Kationen erzeugt wird und der für die alternierend positiv-negative Schichtabfolge notwendig ist, wird hier durch statistisch auftretende Paarungen von freiem Gitterplatz in der Metallhydroxidschicht (X/Y Ebene) mit zwei in Z-Richtung benachbarten (oberhalb und unterhalb der Schichtebene) tetraedrisch koordinierten Kationen erzeugt. Diesbezüglich unterscheiden sich diese LSH von anderen schichtförmigen, elektroneutralen Metallhydroxiden wie Magnesiumhydroxid (Brucite). Beispiele sind die Hydroxide von Zn, Co, Ni und Cu oder gemischt zweiwertige Hydroxide, beispielsweise Zn/Ni.

Wichtige Kennzeichen von schichtförmigen Hydroxiden sind demnach eine ausgeprägte strukturelle Anisotropie und die Tatsache, dass zwischen zwei benachbarten Metallhydroxidschichten jeweils Agenzien durch nicht-kovalente, ionische und/oder nicht-kovalente polare Wechselwirkungen eingelagert sind. Hierbei kann es sich beispielsweise um die schon genannten anorganischen Anionen, insbesondere Karbonat, sowie Wasser handeln. Ebenfalls möglich ist

aber die Einlagerung von weiteren anorganischen und organischen Agenzien, insbesondere Anionen, wobei diese Agenzien entweder bei der Herstellung der schichtförmigen Hydroxide direkt eingebaut werden und/oder durch eine anionische Austauschreaktionsmethode in schon hergestellte schichtförmige Hydroxide eingebracht werden können.

Die Tatsache, dass die schichtförmigen Hydroxide die beschriebene strukturelle Anisotropie aufweisen und zudem die Möglichkeit besteht, auf die beschriebenen Arten unterschiedliche Anionen in die schichtförmigen Hydroxide zu integrieren, führte zu unterschiedlichsten Nutzungen und Anwendungen dieser Systeme, insbesondere von LDH. Ein dabei zentrales technisches Gebiet ist der Bereich der Beschichtungsmittel beziehungsweise Lacke.

So gibt es Ansätze, bei denen LDH in Beschichtungsmittel auf Basis polymerer Bindemittel (beispielsweise Grundierungsmittel, Füller und Wasserbasislacke) eingearbeitet werden und darin zu unterschiedlichen anwendungstechnischen Eigenschaften, beispielsweise einem erhöhten Korrosionsschutz und/oder einer erhöhten mechanischen Beständigkeit, insbesondere einer erhöhten Steinschlagfestigkeit, führen. Auch der Einsatz zur gezielten Beeinflussung optischer Eigenschaften, beispielsweise in Effektwasserbasislacken, ist bekannt. Das Zusammenspiel von struktureller Anisotropie und der daraus folgenden Barrierewirkung sowie der chemischen Anpassbarkeit wird hier also genutzt. So werden beispielsweise Korrosionsschutzagenzien in anionischer Form in die anionischen Schichten von Hydrotalkiten beziehungsweise LDH eingelagert und die LDH tragen somit zum Korrosionsschutz bei. Aber auch LDH enthaltend typische anorganische Anionen, beispielsweise Karbonat, können den Korrosionsschutz verbessern.

So beschreibt die WO 03/102085 synthetische Hydrotalkit-Komponenten beziehungsweise schichtförmige Doppelhydroxide (LDH) enthaltend austauschbare Anionen und deren Einsatz in Beschichtungsmitteln zur Verbesserung des Korrosionsschutzes von Aluminiumoberflächen. Die schichtförmigen Doppelhydroxide werden dabei durch die bereits weiter oben angegebene, idealisierte allgemeine Formel $[M2^{2+}{}_{(1-x)}\ M3^{3+}{}_{x}(OH)_2]^{x+}\ [A^{x-}\cdot nH_2O]$ beschrieben. Als Metallkationen sind die Hydrotalkit-Kationen Magnesium(II) und Aluminium(III) bevorzugt. Als Anionen werden beispielsweise Nitrat, Karbonat oder Molybdat aber auch die chromhaltigen Anionen Chromat und Dichromat beschrieben.

Weitere Hydrotalkit-Komponenten beziehungsweise LDH und deren Einsatz als Korrosionsschutzmittel in Beschichtungsmitteln auf Basis organischer polymerer Bindemittel werden beispielsweise in EP 0282619 A1, WO 2005/003408 A2 oder ECS Transactions, 24 (1) 67-76 (2010) beschrieben. Dabei kommen neben den schon beschriebenen anorganischen Anionen beispielsweise auch organische Anionen wie Salicylat, Oxalat, DMTD (2,4-dimercapto-1,3,4-thiadiazol) und dessen Derivate, aus EDTA erhältliche Anionen oder Benzotriazolat zum Einsatz.

Die WO 2009/062621 A1 beschreibt ebenfalls den Einsatz von LDH enthaltend organische Anionen in Beschichtungsmitteln für die Herstellung steinschlagfester OEM-Schichtverbunde im Rahmen der Automobillackierung. Bekanntermaßen bestehen solche OEM-Schichtverbunde in der Regel aus einer Korrosionsschutzlackierung (insbesondere KTL), einer Füllerschicht, einer Basislackschicht und einer abschließenden Klarlackschicht. Die LDH werden in der Füllerschicht eingesetzt. Die Füllerschicht weist dabei neben einer hohen Steinschlagbeständigkeit eine gute Haftung zur darunter liegenden KTL und der darüber liegenden Basislackschicht und zudem gute Füllereigenschaften (Abdeckung der Struktur des Substrats) auf.

WO 2010/130308 A1 beschreibt den Einsatz von LDH in Effektwasserbasislacken auf Basis eines speziellen Polyesters, wobei die daraus hergestellten Lackierungen vorteilhafte optische Eigenschaften aufweisen. Insbesondere wird eine gute Helligkeit der Lackierung bei gleichzeitigem Erhalt des Flop-Effektes erreicht.

Die WO 2010/130309 A1 beschreibt Zusammensetzungen enthaltend einen carboxyfunktionellen Polyester auf Basis von dimeren Fettsäuren sowie ein synthetisches schichtförmiges Hydroxid. Das schichtförmige Hydroxid wird dabei separat vor dem Vermischen mit dem Polyester hergestellt.

Ein Nachteil der bekannten LDH-haltigen Beschichtungsmittel ist, dass die anisotropen schichtförmigen Hydroxide in der Regel zu einer Agglomeration neigen, das heißt also, die LDH liegen in dem Beschichtungsmittel und in der daraus hergestellten Beschichtung oft nicht homogen verteilt vor, sondern bilden eher Agglomerate. Solche Agglomerate können selbstverständlich die Ausbildung eines homogenen Beschichtungsfilms und dessen Eigenschaften empfindlich stören. Die Agglomerate bilden sich auch unabhängig davon, dass die LDH vor dem Einsatz in einem Beschichtungsmittel in Pulverform erhalten werden beziehungsweise entsprechend vermahlen werden. In dem Beschichtungsmittel reorganisieren sich die LDH-Strukturen und bilden beispielsweise wieder vergrößerte Schichtstrukturkomplexe aus. Diese Agglomeration tritt insbesondere bei LDH auf Basis von Karbonat auf, da dieses Anion als das auch in den natürlichen Hydrotalkitkomponenten enthaltene Anion die wohl stärkste Bindungsaffinität zu den Metallhydroxidschichten aufweist und somit eine Agglomeration beziehungsweise Bildung von ausgeprägten positiv-negativ-Schichtstrukturen fördert. Zwar ist der wie oben beschriebene Ersatz des Karbonats durch andere Anionen wie beispielsweise anorganischen oder organischen korrosionsinhibierenden Anionen oft wünschenswert, sodass gleichzeitig der beschriebene Agglomerationseffekt des Karbonats herabgesetzt werden kann. Jedoch ist dieser Effekt, wenn auch in abgeschwächter Form, selbstverständlich auch bei der Interkalation anderer Anionen präsent, sodass auch in diesem Fall oft keine zufriedenstellende Unterdrückung des Agglomerationseffektes gelingt.

Ein weiteres Problem bei Einsatz von schichtförmigen Hydroxiden, die andere Anionen als Karbonat enthalten, ist, dass in den Beschichtungsmitteln die entsprechenden Anionen, beispielsweise korrosionsinhibierenden Agenzien oder Anionen, die zur Herabsetzung des Agglomerationseffektes eingesetzt werden, sukzessive durch Karbonat ausgetauscht werden können, das heißt also thermodynamisch kontrolliert durch das Karbonat verdrängt werden können. Zwar tritt dieser Effekt praktisch kaum in schon gehärteten (und damit metastabilen) Beschichtungen auf, jedoch ist dies insbesondere in wasserbasierten Beschichtungsmitteln möglich. Hierdurch wird nicht nur wiederum die ungewollte Agglomeratbildung gefördert, sondern es werden auch in der Regel monomere Anionen aus den schichtförmigen Hydroxiden freigesetzt, die wenn überhaupt nur in besonderen Situationen wie beispielsweise der Schädigung einer Beschichtung und der dann gewollten Verfügbarkeit von korrosionsinhibierenden Agenzien freigesetzt werden sollen. Ohne eine solche Schädigung ist das Freisetzen nicht erwünscht, sondern kann vielmehr zu nicht vorhersehbaren Unverträglichkeiten führen. Beispielsweise können diese freigesetzten Ionen als plastifizierende und hydrophile Bestandteile die Barrierefunktion der Beschichtung beinträchtigen, zu einer verstärkten Quellbarkeit durch Feuchte sowie möglicherweise zu Enthaftung führen (wenn beispielsweise eine Migration dieser Agenzien in Grenzschichten erfolgt).

Ganz besonders ausgeprägt ist der Effekt des Freisetzen beziehungsweise Ausblutens dann, wenn Beschichtungsmittel, welche schichtförmige Hydroxide enthalten, zudem polymere Bindemittel enthalten, die selbst (potentiell) organische anionische Gruppen, insbesondere Carboxylgruppen beziehungsweise Carboxylatgruppen, enthalten. In diesem Fall können die Carboxylatgruppen die organischen Anionen aus den LDH herausdrängen und somit besonders ausgeprägte Unverträglichkeiten hervorrufen. Als Alternative bleiben dann jedoch nur die karbonathaltigen LDH, welche wiederum wegen der Agglomeratbildung nachteilig sind.

Jedoch sind bekanntermaßen gerade carboxyfunktionelle polymere Bindemittel, insbesondere Polyester, von hoher Relevanz, da solche Bindemittel beispielsweise besonders gut zur Herstellung von wasserbasierten Systemen geeignet sind. Aber selbst in nicht wasserbasierten Systemen bedingt der chemische Aufbau polymerer Bindemittel, beispielsweise Polyestern, häufig, dass Carboxylgruppen enthalten sind.

Die geschilderten Probleme bestehen selbstverständlich auch in Gemischen, die noch nicht als eigentliches Beschichtungsmittel beziehungsweise Lack zu bezeichnen sind, die aber bereits schichtförmige Hydroxide und polymere Bindemittel, insbesondere (potentiell) anionische Polyester enthalten und die durch den Zusatz weiterer Bestandteile, beispielsweise typischen Vernetzungsmitteln und/oder typischen Additiven, in Beschichtungsmittel überführt werden können.

## Aufgabe

Aufgabe der vorliegenden Erfindung war demzufolge, eine Zusammensetzung bereitzustellen, die die Nachteile des Stands der Technik nicht länger aufweist, sondern LDH in fein verteilter Form und insbesondere ohne ausgeprägtes Agglomerieren enthält. Insbesondere sollte es anhand der Zusammensetzung möglich sein, LDH in Beschichtungsmitteln, insbesondere wasserbasierten Beschichtungsmitteln, einzusetzen und dabei die bekannten Agglomerations- und Ausblutungseffekte zu vermeiden. Gleichzeitig sollte es möglich sein, anhand der Zusammensetzung Beschichtungsmittel bereitzustellen, die (potentiell) anionische Bindemittel, insbesondere carboxygruppenhaltige Bindemittel enthalten und in denen dabei trotzdem die genannten nachteiligen Effekte nicht oder nur in geringem Maße auftreten.

## Lösung

Gefunden wurde eine neue Zusammensetzung enthaltend

(A) mindestens einen carboxyfunktionellen Polyester mit einer Säurezahl im Bereich von 20 bis 250 mg KOH/g, bei dessen Herstellung mindestens ein difunktionelles Monomer (a1) mit aliphatischen Gruppen mit 12 bis 70 Kohlenstoffatomen zwischen den funktionellen Gruppen eingesetzt wird,
sowie

(B) mindestens ein synthetisches schichtförmiges Hydroxid,

welche dadurch gekennzeichnet ist, dass das mindestens eine schichtförmige Hydroxid (B) in Gegenwart des Polyesters (A) hergestellt wird.

Die neue Zusammensetzung wird in der Folge auch als erfindungsgemäße Zusammensetzung bezeichnet. Bevorzugte Ausführungsformen der erfindungsgemäßen Zusammensetzung sind der folgenden Beschreibung sowie den Unteransprüchen zu entnehmen.

Weiterhin Gegenstand der vorliegenden Erfindung ist ein Verfahren zur Herstellung der erfindungsgemäßen Zusammensetzung, bei dem in Gegenwart

(a) mindestens eines carboxyfunktionellen Polyesters (A) mit einer Säurezahl im Bereich von 20 bis 250 mg KOH/g,

bei dessen Herstellung mindestens ein difunktionelles Monomer (a1) mit aliphatischen Gruppen mit 12 bis 70 Kohlenstoffatomen zwischen den funktionellen Gruppen eingesetzt wird,

(b) mindestens ein synthetisches schichtförmiges Hydroxid hergestellt wird.

Ebenfalls Gegenstand der vorliegenden Erfindung ist die Verwendung der erfindungsgemäßen Zusammensetzung als Beschichtungsmittel beziehungsweise zur Herstellung eines Beschichtungsmittels.

Insbesondere wurde gefunden, dass die in der erfindungsgemäßen Zusammensetzung enthaltenen schichtförmigen Hydroxide eine wesentlich feinere Verteilung besitzen als dies in Systemen des Stands der Technik, die neben schichtförmigen Hydroxiden auch carboxyfunktionelle Bindemittel, insbesondere Polyester, enthalten. Die erfindungsgemäßen Zusammensetzungen unterscheiden sich damit auf struktureller Ebene von den Zusammensetzungen des Stands der Technik. Die Zusammensetzung kann damit hervorragend als Beschichtungsmittel beziehungsweise zur Herstellung von Beschichtungsmitteln eingesetzt werden, die neben den beiden Bestandteilen (A) und (B) noch weitere typische Lackbestandteile enthalten. Beispielhaft seien Vernetzungsmittel, weitere typische polymere Bindemittel, die (potentiell) anionische Gruppen enthalten oder auch frei von diesen seien können und weitere typische Lackadditive genannt.

## Ausführliche Beschreibung

Der Polyester (A)

Die erfindungsgemäße Zusammensetzung enthält mindestens einen speziellen carboxyfunktionellen Polyester (A).

Als Polyester wird bekanntermaßen eine polymere organische Verbindung bezeichnet, die unter Einsatz mehrwertiger organischer Alkohole und mehrwertiger organischer Carbonsäuren hergestellt wird. Die Alkohole und Carbonsäuren werden dabei durch Veresterung, das heißt also durch Kondensationsreaktionen, miteinander verknüpft. Entsprechend werden die Polyester in der Regel der Gruppe der Polykondensationsharze zugeordnet. Zur Herstellung von Polyestern können bekanntermaßen auch statt oder neben den entsprechenden organischen Carbonsäuren die Anhydride der Carbonsäuren, insbesondere die Anhydride von Dicarbonsäuren, eingesetzt werden. Im Rahmen der vorliegenden Erfindung ist unter der Bezeichnung Anhydrid also ein Carbonsäureanhydrid zu verstehen. Ebenfalls möglich ist die Herstellung durch den Einsatz von Hydroxycarbonsäuren oder den von den Hydroxycarbonsäuren durch intramolekulare Veresterung abgeleiteten Lactonen.

Die zur Herstellung der erfindungsgemäßen Zusammensetzungen eingesetzten Polyester (A) sind solche, bei deren Herstellung mindestens ein difunktionelles Monomer (a1) mit aliphatischen Gruppen mit 12 bis 70 Kohlenstoffatomen zwischen den funktionellen Gruppen eingesetzt wird.

Als Monomere, die zur Herstellung der Polyester (A) eingesetzt werden, werden im Rahmen der vorliegenden Erfindung alle bei der Herstellung dieser Polyester (A) eingesetzten einzelnen Ausgangsverbindungen, deren Grundgerüste in den Polyester eingebaut werden, bezeichnet. Dabei handelt es sich beispielsweise um typische monomere Verbindungen mit zwei entsprechenden funktionellen Gruppen wie beispielsweise 1,6-Hexandiol. Als Ausgangsverbindungen zur Herstellung von Polyestern können bekanntermaßen aber auch Verbindungen eingesetzt werden, die selbst bereits durch auf unterschiedlichste Weise mögliche Verknüpfung mehrerer einzelner Moleküle hergestellt sind. Beispielhaft sei auf die unten beschriebenen dimeren Fettsäuren verwiesen. Jedoch sind auch diese Verbindungen als Ausgangsverbindungen zu bezeichnen, die durch entsprechende Polymerisationsreaktionen in den Polyester eingebaut werden und dann einen nicht selbstständiger Anteil am Polyester ausmachen. Demzufolge werden auch diese Ausgangsverbindungen als Monomere bezeichnet.

Aliphatische Verbindungen sind bekanntermaßen acyclische oder cyclische, gesättigte oder ungesättigte Kohlenstoffwasserstoffverbindungen, die nicht aromatisch sind. Im Rahmen der vorliegenden Erfindung sind unter Aliphaten also aliphatische Kohlenwasserstoffverbindungen, das heißt Verbindungen bestehend aus Kohlenstoff und Wasserstoff, zu verstehen. Der Begriff aliphatische Verbindung umfasst acyclische und cyclische Aliphaten und gilt auch im Rahmen der vorliegenden Erfindung als entsprechender Oberbegriff. Die acyclischen Aliphaten können linear oder verzweigt sein. Linear bedeutet in diesem Zusammenhang bekanntermaßen, dass die jeweilige Verbindung keine Verzweigungen hinsichtlich der Kohlenstoffkette aufweist, sondern die Kohlenstoffatome ausschließlich in linearer Abfolge in einer Kette angeordnet sind. Verzweigt beziehungsweise nichtlinear bedeutet damit im Rahmen der vorliegenden Erfindung, dass die jeweils betrachtete Verbindung eine Verzweigung in der Kohlenstoffkette aufweist, das heißt also anders als bei den linearen Verbindungen mindestens ein Kohlenstoffatom der jeweiligen Verbindung ein tertiäres oder quartäres Kohlenstoffatom ist. Als cyclische Aliphaten beziehungsweise Cycloaliphaten werden solche Verbindungen bezeichnet, in denen zumindest ein Teil der vorhandenen Kohlenstoffatome im Molekül so verknüpft sind, dass einer oder mehrere Ringe ausgebildet werden. Natürlich können neben dem einen oder den mehreren Ringen weitere acyclische lineare

oder verzweigte aliphatische Gruppen in einem Cycloaliphaten vorhanden sein.

Eine aliphatische Gruppe ist demzufolge eine Gruppe, die die oben für die aliphatischen Verbindungen genannten Voraussetzungen erfüllt, jedoch nur ein Teil eines Moleküls ist. Neben der aliphatischen Gruppe sind in dem entsprechenden Molekül noch andere Gruppen wie beispielsweise funktionelle Gruppen enthalten. Als funktionelle Gruppen werden im Rahmen der vorliegenden Erfindung endständige Gruppen bezeichnet, die Heteroatome wie Sauerstoff, Schwefel und/oder Stickstoff enthalten, beispielsweise Hydroxylgruppen oder Carboxylgruppen. Enthalten sein können in solchen Molekülen selbstverständlich auch verbrückende Heteroatome beziehungsweise verbrückende Gruppen enthaltend Heteroatome. Beispielhaft seien Etherbindungen genannt.

Als Monomere mit aliphatischen Gruppen zwischen funktionellen Gruppen werden folglich solche Monomere bezeichnet, die neben den entsprechenden funktionellen Gruppen aliphatische Gruppen, welche zwischen den funktionellen Gruppen angeordnet sind, aufweisen. Die Monomere bestehen also aus entsprechenden funktionellen Gruppen und aliphatischen Gruppen, enthalten also lediglich die (endständigen) funktionellen Gruppen und die aliphatischen Gruppen.

Die funktionellen Gruppen der difunktionellen Monomere (a1) sind augenscheinlich solche, die zur Bildung von Esterbindungen befähigt sind, das heißt also insbesondere Hydroxylgruppen und/oder Carbonsäuregruppen sowie Anhydridgruppen. Die Monomere (a1) sind also bevorzugt Diole, Dicarbonsäuren und/oder Hydroxycarbonsäuren sowie Anhydride.

Die aliphatischen Gruppen der Monomere (a1) besitzen 12 bis 70, bevorzugt 13 bis 50 und besonders bevorzugt 14 bis 40 Kohlenstoffatome.

Der Anteil der zur Herstellung der Polyester (A) eingesetzten Monomere (a1) kann je nach Einzelfall breit variieren. Möglich ist beispielsweise, einen Polyester (A) unter Einsatz von wie weiter unten genauer beschriebenen Dimerfettsäuren (a1) und dimeren Fettalkoholen (a1) herzustellen. Möglich ist auch, einen signifikanten oder sogar überwiegenden Anteil von anderen Monomeren einzusetzen, so lange Monomere (a1) jedenfalls eingesetzt werden. Bevorzugt ist, dass bei der Herstellung der Polyester (A), bezogen auf die Gesamtmenge der bei der Herstellung des Polyesters (A) eingesetzte Monomere, mindestens 5 mol-% Monomere (a1) eingesetzt werden. In einer Ausführungsform der vorliegenden Erfindung kann der Anteil von bevorzugt 5 bis 70 mol-%, insbesondere bevorzugt 6 bis 66 mol-%, besonders bevorzugt 7 bis 62 mol-% der Monomere (a1) betragen. In einer weiteren bevorzugten Ausführungsform werden beispielsweise mindestens 80 mol-%, bevorzugt mindestens 90 mol-%, insbesondere mindestens 95 mol-% Monomere (a1) eingesetzt. In dieser Ausführungsform wird der Polyester (A) bevorzugt durch Umsetzung von aliphatischen Dimerfettsäuren (a1) und dimeren aliphatischen Fettalkoholen (a1) erhalten. Da die in der Regel eingesetzten Dimerfettsäuren (a1) als Handelsprodukte meist als Gemische vorliegen, die noch geringe, weiter unten genauer spezifizierte Anteile von nicht aliphatischen Dimerfettsäuren enthalten, wird in dieser Ausführungsform ein Polyester (A) erhalten, der bis auf diesen geringen Anteil nicht aliphatischer Dimerfettsäuren ausschließlich aus Monomeren (a1) besteht.

Besonders bevorzugte Monomere (a1) sind beispielsweise vollständig hydrierte Bisphenole, beispielsweise das vollständig hydrierte Bisphenol A. Genauso bevorzugt sind dimere aliphatische Fettalkohole und/oder dimere aliphatische Fettsäuren, wobei darunter die dimeren aliphatischen Fettsäuren bevorzugt sind. Ganz besonders bevorzugt sind im Rahmen der vorliegenden Erfindung dimere aliphatische Fettsäuren mit 24 bis 40 Kohlenstoffatomen sowie vollständig hydriertes Bisphenol A.

Dimere aliphatische Fettsäuren sind herstellbar durch katalytische Dimerisierung von pflanzlichen, ungesättigten Fettsäuren, wobei insbesondere die 18 Kohlenstoffatome enthaltenden ungesättigten Fettsäuren zur Herstellung eingesetzt werden, das Produkt also insgesamt 36 Kohlenstoffatome aufweist. Die Verknüpfung verläuft vornehmlich nach dem Diels-Alder-Typ und es resultieren Gemische aus beispielsweise cycloaliphatischen und linear-aliphatischen dimeren Fettsäuren, welche je nach Mechanismus und/oder gegebenenfalls nachträglicher Hydrierung gesättigt oder ungesättigt sein können. Neben den aliphatischen Addukten (a1) enthalten diese Gemische meist auch gewisse Anteile an aromatischen beziehungsweise gemischt aliphatisch-aromatischen Gruppen. Dimere aliphatische Fettalkohole werden in der Regel durch Reduktion von dimeren Fettsäuren gewonnen, wobei dabei auch die aromatischen Gruppen reduziert werden. In aliphatischen dimeren Fettalkoholen sind demnach in der Regel keine Anteile der beschriebenen aromatischen Gruppen vorhanden.

Demzufolge werden neben den Monomeren (a1) zur Herstellung der Polyester (A) bevorzugt auch difunktionelle Monomere (a2) eingesetzt, die ebenfalls 12 bis 70 Kohlenstoffatome, bevorzugt 13 bis 50 und besonders bevorzugt 14 bis 40 Kohlenstoffatome zwischen den funktionellen Gruppen enthalten, die aber nicht rein aliphatisch sind, sondern zumindest anteilig auch aromatisch sind. Bevorzugt sind diese Gruppen also gemischt aliphatisch-aromatisch, das heißt die Gruppen mit 12 bis 70 Kohlenstoffatomen enthalten aliphatische und aromatische Teile. Der Anteil dieser Monomere (a2) an den zur Herstellung des Polyesters (A) eingesetzten Monomeren kann demnach abhängig davon variieren, ob als Monomere (a1) beispielsweise dimere Fettsäuren eingesetzt werden beziehungsweise in welchem Anteil der Monomere (a1) dimere Fettsäuren eingesetzt werden. Denn wenn dimere Fettsäuren eingesetzt werden, was bevorzugt ist, so werden hierzu in der Regel die oben genannten Gemische eingesetzt, sodass demnach auch Monomere (a2)

enthalten sind. Werden keine dimeren Fettsäuren eingesetzt, sondern beispielsweise nur hydriertes Bisphenol A und/oder Dimerdiole, so sind in der Regel auch keine Monomere (a2) enthalten. Bevorzugt werden aber jedenfalls dimere aliphatische Fettsäuren eingesetzt, ganz besonders bevorzugt sowohl dimere aliphatische Fettsäuren als auch hydriertes Bisphenol A.

Das molare Verhältnis von rein aliphatischen dimeren Fettsäuren zu nichtaliphatischen dimeren Fettsäuren in den beschriebenen durch die katalytische Dimerisierung hergestellten Gemischen beträgt in der Regel 2 bis 10.

Demzufolge werden die Monomere (a2), bezogen auf die Gesamtmenge der bei der Herstellung des Polyesters (A) eingesetzte Monomere, bei der Herstellung des Polyesters (A) in Anteilen von beispielsweise 0 bis 10 mol-%, bevorzugt 0,5 bis 5 mol-%, eingesetzt, wobei die Menge insbesondere von den oben genannten Kriterien beeinflusst wird.

Die genannten dimeren Fettsäuren beziehungsweise Monomere (a1) können in entsprechenden Gemischen mit Monomeren (a2) als Handelsprodukte erhalten werden. Insbesondere zu nennen sind die dimeren Fettsäuren der Pripol®-Serie der Fa. Unichema.

Als weitere Bausteine können bei der Herstellung des Polyesters (A) bevorzugt die folgenden Monomere eingesetzt werden:

- (a3) lineare aliphatische und/oder cycloaliphatische Diole mit 2 bis 11 Kohlenstoffatomen, wie insbesondere Ethylenglykol, Diethylenglykol, 1,3-Propandiol, Dipropylenglykol, 1,4-Butandiol, 1,6-Hexandiol, 1,4-Cyclohexandiol und/oder 1,4-Dimethylolcyclohexan, besonders bevorzugt 1,4-Butandiol und/oder 1,6-Hexandiol, wobei diese Diole bei der Herstellung des Polyesters (A) bevorzugt in Anteilen von beispielsweise 0 bis 40 mol-%, bevorzugt 0 bis 35 mol-%, bezogen auf die Gesamtmenge der bei der Herstellung des Polyesters (a1) eingesetzten Monomere, eingesetzt werden,
- (a4) verzweigte aliphatische Diole mit 4 bis 11 Kohlenstoffatomen, wie insbesondere Neopentylglykol, 2-Methyl-2-propylpropandiol, 2-Ethyl-2-butylpropandiol, 2,2,4,-Trimethyl-1,5-pentandiol, 2,2,5-Trimethyl-1,6-hexandiol, besonders bevorzugt Neopentylglykol, wobei diese Diole bei der Herstellung des Polyesters (A) bevorzugt in Anteilen von beispielsweise 0 bis 45 mol-%, bevorzugt 0 bis 40 mol-%, bezogen auf die Gesamtmenge der bei der Herstellung des Polyesters (A) eingesetzten Monomere, eingesetzt werden,
- (a5) linear aliphatische, cycloaliphatische und/oder aromatische Dicarbonsäuren mit 4 bis 13 Kohlenstoffatomen, wie insbesondere Oxalsäure, Malonsäure, Bernsteinsäure, Glutarsäure, Adipinsäure, Sebacinsäure, Maleinsäure, Fumarsäure, Isophthalsäure, Terephthalsäure, Orthophthalsäure, Tetrahydrophthalsäure, Hexahydrophthalsäure, 1,4-Cyclohexandisäure beziehungsweise deren Anhydride, besonders bevorzugt Hexahydrophthalsäure, wobei diese Dicarbonsäuren bei der Herstellung des Polyesters (A) bevorzugt in Anteilen von beispielsweise 5 bis 30 mol-%, bevorzugt 10 bis 25 mol-%, bezogen auf die Gesamtmenge der bei der Herstellung des Polyesters (A) eingesetzten Monomere, eingesetzt werden,
- gegebenenfalls weitere difunktionelle Monomere (a6) mit beispielsweise 12 bis 70 Kohlenstoffatomen, welche beispielsweise verbrückende Heteroatome beziehungsweise verbrückende Gruppen enthaltend Heteroatome enthalten, in Anteilen von beispielsweise 0 bis 10 mol-%, bezogen auf die Gesamtmenge der bei der Herstellung des Polyesters (A) eingesetzten Monomere,
- gegebenenfalls von den Monomeren (a1) bis (a6) verschiedene Monomere (a7), die beispielsweise nur monofunktional sind, das heißt nur eine Hydroxylgruppe oder eine Carbonsäuregruppe enthalten, oder beispielsweise mehr als zwei funktionelle Gruppen aufweisen, beispielsweise drei funktionelle Gruppen. Möglich sind natürlich auch Monomere (a7), die eine freie Carbonsäuregruppe und eine Anhydridgruppe enthalten, beispielsweise Benzoltricarbonsäureanhydrid. Dieses Monomer ist selbstverständlich ebenfalls formal mit drei funktionellen Gruppen ausgestattet, denn die Anhydridgruppe ist eine hinsichtlich der daraus möglichen Verknüpfungen difunktionell. Genauso möglich sind als Monomere (a7) beispielsweise Hydroxycarbonsäuren und weitere, dem Fachmann in diesem Zusammenhang bekannte Monomere. Solche Monomere (a7) sind beispielsweise in Anteilen von 0 bis 10 mol-%, bezogen auf die Gesamtmenge der bei der Herstellung des Polyesters (A) eingesetzten Monomere, enthalten.

Der Polyester (A) ist carboxyfunktionell und weist eine Säurezahl von 20 bis 250, bevorzugt 25 bis 175, ganz besonders bevorzugt von 30 bis 150 mg KOH/g auf. Die Säurezahl wird im Rahmen der vorliegenden Erfindung gemäß DIN EN ISO 3682 gemessen.

Die OH-Zahl des Polyesters (A) kann je nach eingesetzten Monomeren und/oder gewählten Reaktionsbedingungen bei der Herstellung breit variieren und liegt beispielsweise im Bereich von 0 bis 200, bevorzugt 0 bis 150, ganz besonders bevorzugt von 0 bis 100 mg KOH/g. Je nach der im Einzelnen geplanten Verwendung der erfindungsgemäßen Zusammensetzung kann es von Vorteil sein, dass eine gewisse Menge an Hydroxylgruppen verfügbar ist, beispielsweise zur chemischen Vernetzung mit einem Vernetzer in einem Beschichtungsmittel. Demnach liegt die OH-Zahl in einer bevorzugten Variante der Erfindung im Bereich von 40 bis 200, insbesondere 60 bis 150 mg KOH/g. Es kann sich aber auch anbieten, dass der Polyester keine oder nur weniger OH-Gruppen enthält. In einer weiteren bevorzugten Variante liegt die OH-Zahl demnach im Bereich von 0 bis 50, bevorzugt 0 bis 25 mg KOH/g. Die OH Zahl wird nach DIN 53240

gemessen. Im Rahmen der vorliegenden Erfindung versteht sich die Angabe einer OH-Zahl oder Säurezahl eines Polymers immer in Bezug auf den entsprechenden nichtflüchtigen Anteil (bestimmt nach DIN ISO 3251 mit einer Einwaage von 1,0 g Reaktionsmischung bei einer Prüfdauer von 60 min und bei einer Temperatur von 125 °C). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Das zahlenmittlere Molekulargewicht des Polyesters (A) kann breit variieren und liegt beispielsweise im Bereich von 500 bis 20000 g/mol. Auch das gewichtsmittlere Molekulargewicht ist ein an sich unkritischer Parameter und liegt beispielsweise im Bereich von 1000 bis 30000 g/mol. Die Bestimmung der Molekulargewichte erfolgt im Rahmen der vorliegenden Erfindung mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

Die Herstellung der Polyester (A) und damit die Umsetzung der Monomere erfolgt nach den allgemein gut bekannten Methoden der Polyesterchemie, wobei der Fachmann ebenfalls weiß, wie er die Bedingungen zu wählen hat, um beispielsweise die oben genannten bevorzugten Eigenschaften, beispielsweise OH-Zahl und Säurezahl, zu erhalten. Die Umsetzung kann beispielsweise in Masse oder in Lösung mit typischen organischen Lösemitteln bei Temperaturen von beispielsweise 50°C bis 300°C, bevorzugt 100°C bis 290°C, insbesondere 140°C bis 280°C erfolgen. Insbesondere durch Reaktionstemperaturen von über 140°C kann gewährleistet werden, dass bei gleichzeitigem Einsatz von Anhydriden und freien Carbonsäuren auch eine effektive Umsetzung von freien Carbonsäuren, das heißt ein effektiver Einbau der entsprechenden Monomere in das Polyestergerüst, von statten geht. Selbstverständlich können auch typische Katalysatoren wie Schwefelsäure und/oder Tetraalkyltitanate, Zink- beziehungsweise Zinnalkoxylate, Dialkylzinnoxide oder organische Salze der Dialkylzinnoxide zum Einsatz kommen.

In einer besonderen Ausführungsform der vorliegenden Erfindung wird ein Polyester (A) eingesetzt, der herstellbar ist durch ringöffnende Umsetzung von
mindestens einem Anhydrid der Formel (I)

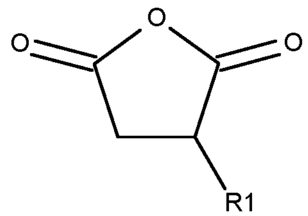

(I)

wobei $R_1$ = H, $C_1$- bis $C_{24}$-Alkyl, $C_2$- bis $C_{24}$-Alkenyl
mit
mindestens einem linearen hydroxyfunktionellen Polyester (AA), bei dessen Herstellung 7 bis 95 mol-%, bezogen auf die Gesamtmenge der bei der Herstellung des Polyesters (AA) eingesetzten Monomere, mindestens ein difunktionelles Monomer (a1) mit aliphatischen Gruppen mit 12 bis 70 Kohlenstoffatomen zwischen den funktionellen Gruppen eingesetzt wird.

Wie der Fachmann weiß, erfolgt eine solche Umsetzung zwischen einem Anhydrid und einer Hydroxylgruppe unter Bildung einer Esterbindung und einer Carboxylgruppe. Der lineare hydroxyfunktionelle Polyester (AA), bevorzugt ein dihydroxyfunktioneller Polyester (AA) wird also unter Ausbildung einer Esterbindung mit einer entsprechenden carboxyfunktionellen endständigen Gruppe modifiziert, wodurch dann ein erfindungsgemäß einzusetzender Polyester (A) entsteht.

Im Rahmen der vorliegenden Erfindung versteht sich der Ausdruck "ringöffnende Umsetzung" also so, dass außer genau dieser ringöffnenden Umsetzung keine weiteren Reaktionen auftreten, das heißt insbesondere keine weiteren Reaktionen der durch die ringöffnende Umsetzung entstehenden Carbonsäuregruppen mit weiteren, in der Reaktionsmischung noch vorhandenen Molekülen der hydroxyfunktionellen Komponente (AA) auftreten. Wie der Fachmann weiß, wäre eine solche Kondensationsreaktion unter Ausbildung einer weiteren Esterbindung grundsätzlich möglich. Eine solche Weiterreaktion kann jedoch auf dem Fachmann ebenfalls bekannte Weise durch entsprechend angepasste Reaktionsführung problemlos unterbunden werden. Bekanntermaßen weist ein Anhydrid aufgrund der Ringspannung und der daraus folgenden höheren Energiefreisetzung bei der Reaktion mit einer Hydroxylgruppe eine höhere Reaktivität auf, als eine freie Carbonsäuregruppe. So ist es beispielsweise möglich, dass bei Reaktionstemperaturen gearbeitet wird, die die ringöffnende Umsetzung zulassen, jedoch keine weiteren Kondensationsreaktionen ermöglichen. Auch durch den gezielten Einsatz beziehungsweise das gezielte Weglassen, insbesondere das Weglassen, von Katalysatoren, beispielsweise typischen Säurekatalysatoren oder Dibutylzinnlaurat, kann die gewünschte Reaktionsführung gewährleistet werden. Auch der Zusatz oder das Weglassen von Wasser oder der Einsatz von beispielsweise Wasserabscheidern hat bekanntermaßen Einfluss auf die unterschiedliche Reaktivität, denn während bei der typischen Kondensationsreaktion zwischen Carbonsäure und Alkohol Wasser frei wird, ist dies bei der Reaktion von Anhydrid und Alkohol nicht der Fall. Der Fachmann weiß diese Bedingungen entsprechend anzupassen.

Durch die erfindungsgemäße ringöffnende Umsetzung entsteht demnach ein Polyester (A), welcher Carbonsäuregruppen beziehungsweise zusätzliche Carbonsäuregruppen enthält. Vorzugsweise weist das erfindungsgemäße Poly- oder Diesterderivat an beiden Enden entsprechende carboxyfunktionelle Gruppen auf.

Dies bedeutet also, dass bei der Umsetzung bevorzugt die Komponente (AA) und/oder das molare Verhältnis des eingesetzten Anhydrids zu den Hydroxylgruppen der Komponente (AA) so gewählt wird, dass der resultierende Polyester (A) an beiden Enden entsprechende carboxyfunktionelle Gruppen trägt. Bevorzugt besitzt ein solcher Polyester (A) genau zwei Carbonsäuregruppen pro Molekül.

Demnach ist bevorzugt, dass in solchen Polyestern (A) die aus dem Polyester (AA) stammende Moleküleinheit im Kern beziehungsweise im Zentrum des Polyesters (A) liegt, während die aus dem Anhydrid stammende Moleküleinheiten als Seitenbeziehungsweise Endgruppen vorliegen. Besonders bevorzugt weisen die Polyester (A) genau zwei Endgruppen auf, die auf dem Anhydrid basieren. Dies bedeutet also insbesondere, dass die Komponente (AA) bevorzugt zwei endständige Hydroxylgruppen aufweist. Diese können dann beide mit dem Anhydrid (A) reagieren. Wie weiter oben beschrieben ist, enthält die Komponente (AA) genauso wie der Polyester (A) spezielle aliphatische Gruppen mit mindestens 12 Kohlenstoffatomen. Der daraus folgende hydrophobe Charakter der Komponente (AA) trägt dann mit den an beiden Seiten endständig angebundenen Anhydridmolekülen beziehungsweise mit den beiden entsprechenden freien Carboxylgruppen, welche einen hydrophilen Charakter ausmachen, zu einem besonderen amphiphilen Charakter bei. Während die eher hydrophobe Einheit im Zentrum des Moleküls liegt, sind beide endständigen, sich gegenüber liegenden Seitengruppen hydrophil. Diese speziellen Polyester (A) haben im Rahmen der vorliegenden Erfindung ganz besondere Vorteile hinsichtlich der Feinverteilung der LDH.

Wie der Fachmann weiß, entstehen bei den oben genannten Reaktionen und Reaktionsführungen aus rein statistischen Gründen auch Produkte, die nicht die beschriebene idealisierte Struktur aufweisen. Beispielsweise sind regelmäßig Nebenprodukte zu erwarten, die durch eine Weiterreaktion der entstandenen Polyester (A) mit noch vorhandenen Molekülen der Polyester (AA) entstehen oder Produkte, die trotz der bevorzugten beidseitigen Funktionalisierung nur einseitig funktionalisiert sind. Auch nicht reagierte Ausgangskomponenten werden im Reaktionsgemisch vorhanden sein. Trotzdem können durch die beschriebene Reaktionsführung problemlos als Hauptprodukte die beschriebenen Polyester (A) erhalten werden. Diese können auch ohne weitere Aufreinigung verwendet werden.

Die ringöffnende Umsetzung des Anhydrids der Formel (I) mit der Komponente (AA) kann nach unterschiedlichen, dem Fachmann bekannten Methoden erfolgen, wobei die oben beschriebene Unterbindung der Weiterreaktion der gebildeten Polyester (A) mit Molekülen der hydroxyfunktionellen Komponente (AA) zu beachten ist. Die Umsetzung kann beispielsweise in Masse oder in Lösung, bevorzugt in Lösung mit organischen Lösemitteln wie 4-Methyl-2-pentanon oder weiteren gängigen Lösemitteln, bei Temperaturen von beispielsweise 50°C bis 200°C, bevorzugt 60°C bis 150°C, insbesondere 65°C bis 100°C erfolgen. Insbesondere durch Reaktionstemperaturen von unter 100°C kann eine Weiterreaktion von Polyestern (A) mit Molekülen der hydroxyfunktionellen Komponente (AA) effektiv unterbunden werden. Selbstverständlich können auch typische Katalysatoren wie Schwefelsäure oder Dibutylzinnlaurat eingesetzt werden, wobei allerdings das Weglassen solcher Katalysatoren von Vorteil ist, um die genannte Weiterreaktion zu unterbinden. Die Poly- und Diesterderivate können beispielsweise als Reaktionsgemisch mit organischen Lösemitteln oder nach Destillation von gegebenenfalls eingesetzten organischen Lösemitteln als feste Harze oder Öle erhalten werden.

Die beschriebenen bevorzugten amphiphilen Polyester (A) weisen innerhalb der oben genannten bevorzugten Bereiche insbesondere eine OH-Zahl von 0 bis 50, besonders bevorzugt von 0 bis 25 mg KOH/g auf. Die Säurezahl dieser Polyester (A) ist durch die aus dem Anhydrid resultierenden Carboxylgruppen bevorzugt höher und liegt insbesondere im Bereich von 60 bis 250, bevorzugt von 80 bis 200, ganz besonders bevorzugt von 90 bis 150 mg KOH/g. Die Messmethoden sind weiter oben beschrieben.

Die zur Herstellung dieser Polyester (A) eingesetzten Polyester (AA) können nach den oben beschriebenen Methoden und unter Einsatz der oben beschriebenen Monomere problemlos hergestellt werden. Dabei ist zu beachten, dass der Polyester (AA) linear ist, demnach also insbesondere difunktionelle Monomere zur Herstellung eingesetzt werden, und keine Monomere, die mehr als zwei funktionelle Gruppen enthalten. Wie oben angegeben, besitzen die Polyester (AA) bevorzugt zwei endständige OH-Gruppen, um dann bevorzugt mit zwei Anhydridmolekülen unter Ringöffnung zu reagieren. Die OH-Zahl des Polyesters (AA) ist bevorzugt von 80 bis 200, besonders bevorzugt von 100 bis 190, ganz besonders bevorzugt von 120 bis 180 mg KOH/g. Nach der Umsetzung ergeben sich dann die oben genannte Carboxyfunktionalität und die weiteren gegebenenfalls bevorzugten Parameter, insbesondere die OH-Zahl, die Säurezahl und das Molekulargewicht. Wie der Fachmann die Polyester (AA) herstellt, gehört demnach zum allgemeinen Fachwissen.

Für das Anhydrid gilt $R_1$ = H, $C_1$- bis $C_{24}$-Alkyl, $C_2$- bis $C_{24}$-Alkenyl, bevorzugt H, $C_6$-bis $C_{20}$-Alkyl, $C_6$- bis $C_{20}$-Alkenyl, besonders bevorzugt H und $C_6$- bis $C_{20}$-Alkenyl und besonders vorteilhaft $C_6$- bis $C_{20}$-Alkenyl.

Das schichtförmige Hydroxid (B) und die Herstellung der erfindungsgemäßen Zusammensetzung

Die erfindungsgemäße Zusammensetzung enthält mindestens ein schichtförmiges Hydroxid (B), wobei das schichtförmige Hydroxid in Gegenwart mindestens eines Polyesters (A) hergestellt wird.

Schichtförmige Hydroxide, insbesondere schichtförmige Doppelhydroxide (LDH) sind bekannt.

Eine relevante Gruppe von LDH können durch die folgende allgemeine Formel (II) beschrieben werden:

$$[M2^{2+}_{(1-x)}\ M3^{3+}_{x}(OH)_2][A^{y-}_{(x/y)}]\cdot nH_2O \qquad (II)$$

wobei $M2^{2+}$ für zweiwertige metallische Kationen, $M3^{3+}$ für dreiwertige metallische Kationen und $A^{y-}$ für Anionen der mittleren Valenz y steht. Unter mittlerer Valenz ist im Rahmen der vorliegenden Erfindung der Mittelwert der Valenz der gegebenenfalls unterschiedlichen eingelagerten Anionen zu verstehen. Wie dem Fachmann leicht ersichtlich ist, können unterschiedliche Anionen, die in ihrer Valenz unterschiedlich sind (beispielsweise Karbonat, Nitrat, aus EDTA erhältliche Anion etc.) je nach ihrem jeweiligen Anteil an der Gesamtmenge von Anionen (Gewichtungsfaktor) zu einer jeweils individuellen mittleren Valenz beitragen. Für x sind Werte von 0,05 bis 0,5 bekannt, während der Anteil an Kristallwasser mit Werten von $n$ = 0 bis 10 sehr unterschiedlich sein kann. Dabei befinden sich die zwei- und dreiwertigen Metallkationen sowie Hydroxidionen in regelmäßiger Anordnung kantenverknüpfter Oktaeder in den positiv geladenen Metallhydroxidschichten (erster Klammerausdruck in Formel (II)) sowie die interkalierten Anionen in den jeweiligen negativ geladenen Zwischenschichten (zweiter Klammerausdruck in Formel (II)), wobei zusätzlich Kristallwasser enthalten sein kann.

Möglich sind auch LDH, in denen beispielsweise anstelle von zweiwertigen metallischen Kationen lediglich einwertige metallische Kationen eingesetzt werden, wobei diese LDH dann andere Stöchiometrien hinsichtlich der unterschiedlichen metallischen Kationen und der Anionen aufweisen können. Beispielhaft sei auf die Metallkationenkombination $Li^{+}/Al^{3+}$ verwiesen. Die in solchen LDH existente Stöchiometrie in den Metallhydroxidschichten wird durch die Summenformel $LiAl^{3+}{}_2(OH)_6$ beschrieben.

Ebenfalls als schichtförmige Hydroxide eingesetzt werden können LSH, insbesondere schichtförmige Hydroxide von $Zn^{2+}$, $Co^{2+}$, $Ni^{2+}$ und $Cu^{2+}$.

Die im Rahmen der vorliegenden Erfindung bevorzugt eingesetzten schichtförmige Hydroxide, insbesondere LDH und LSH, enthalten also eine Art eines metallischen Kations oder zwei unterschiedliche Arten metallischer Kationen. Während die LSH eine Art eines zweiwertigen metallischen Kations, beispielsweise $Zn^{2+}$, oder zwei unterschiedliche zweiwertige metallische Kationen enthalten, umfassen die LDH beispielsweise ein zweiwertiges metallisches Kation und ein dreiwertiges metallisches Kation oder ein einwertiges metallisches Kation und ein dreiwertiges metallisches Kation.

Vorzugsweise enthält die erfindungsgemäße Zusammensetzung schichtförmige Hydroxide, insbesondere LDH und LSH, bei denen als einwertiges metallisches Kation $Li^{+}$ ausgewählt ist, die zweiwertigen metallischen Kationen $M2^{2+}$ ausgewählt werden aus der Gruppe bestehend aus $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ und Mischungen davon, bevorzugt $Zn^{2+}$, $Mg^{2+}$, $Ca^{2+}$, $Fe^{2+}$, $Mn^{2+}$ und Mischungen davon, ganz besonders bevorzugt $Zn^{2+}$ und/oder $Mg^{2+}$, insbesondere $Zn^{2+}$ und die dreiwertigen metallischen Kationen $M3^{3+}$ ausgewählt werden aus der Gruppe bestehend aus $Al^{3+}$, $Bi^{3+}$, $Fe^{3+}$, $Cr^{3+}$, $Ga^{3+}$, $Ni^{3+}$, $Co^{3+}$, $Mn^{3+}$.

Die Herstellung von schichtförmigen Hydroxiden ist an sich bekannt. Beispielhaft sei auf E. Kanezaki, Preparation of Layered Double Hydroxides in Interface Science and Technology, Vol. 1, Chapter 12, Page 345 ff. - Elsevier, 2004, ISBN 0-12-088439-9 verwiesen, worin beispielsweise verschiedene Verfahren zur Herstellung von LDH beschrieben werden. Weitere Informationen über die Synthese von LDH sind beispielsweise in D.G. Evans et. al., "Preparation of Layered Double Hydroxides", Struct Bond (2006) 119, pages 89-119 [DOI 10.1007/430_006, Springer Berlin Heidelberg 2005] oder auch Poul et al. Chem. Mater., 2000, 12 (10), 3123-3132 beschrieben.

Beispielsweise kann die Herstellung von schichtförmigen Hydroxiden, insbesondere LDH und LSH, aus Mischungen von anorganischen Salzen der in die schichtförmigen Hydroxide einzubauenden metallischen Kationen unter Einhaltung der erforderlichen und/oder gewünschten Verhältnisse (Stöchiometrien) von einwertigen, zweiwertigen und dreiwertigen metallischen Kationen in wässriger Phase bei definierten, konstant gehaltenen basischen pH-Werten erfolgen. Erfolgt die Synthese in Gegenwart von Kohlendioxid, beispielsweise unter atmosphärischen Bedingungen und/oder durch Zugabe von Karbonaten, enthalten die LDH in der Regel Karbonat als interkaliertes Anion. Grund hierfür ist die schon weiter oben beschriebene hohe Affinität des Karbonats zur Einlagerung in die Schichtstruktur der LDH. Sofern unter Ausschluss von Kohlendioxid und Karbonaten (beispielsweise Stickstoff- oder Argon-Schutzgasatmosphäre, nicht karbonathaltige Salze, karbonatfreies Wasser) gearbeitet wird, enthalten die LDH die anorganischen Anionen der Metallsalze, beispielsweise Chloridionen, als interkalierte Anionen.

Die Synthese kann grundsätzlich auch unter Ausschluss von Kohlendioxid (Schutzgasatmosphäre) beziehungsweise Karbonat und zusätzlich in Anwesenheit von beispielsweise organischen Anionen oder deren saurer Vorstufen, welche nicht als Anion in den Metallsalzen vorhanden sind, durchgeführt werden. Dabei erhält man in der Regel ein gemischtes Hydroxid, welches die entsprechenden organischen Anionen interkaliert hat.

Durch die oben genannte Methode, die so genannte direkte Kopräzipitationsmethode (direct coprecipitation method), erhält man also in einer Ein-Schritt-Synthese die gewünschten schichtförmigen Hydroxide.

Möglich ist bekanntermaßen auch, die Herstellung nach der so genannten Alkoholroute vorzunehmen (vergleiche beispielsweise Poul et al. Chem. Mater., 2000, 12 (10), 3123-3132). Dabei wird grundsätzlich zunächst durch Lösen eines anorganischen Salzes beziehungsweise einer Mischung anorganischer Salze der in die schichtförmigen Hydroxide einzubauenden metallischen Kationen unter Einhaltung der erforderlichen und/oder gewünschten Verhältnisse (Stöchiometrien) eine alkoholische Lösung dieser Salze in beispielsweise Ethanol oder 2-Butoxyethanol hergestellt. Zum Lösen der Salze kann die Mischung, je nach Löslichkeitsverhältnissen, bei Raumtemperatur oder erhöhter Temperatur gerührt werden. Anschließend erfolgt grundsätzlich die Zugabe von basischer wässriger Lösung, wodurch wiederum die Herstellung der Hydroxide gelingt.

Ebenfalls möglich ist die Herstellung von schichtförmigen Hydroxiden, insbesondere LDH und LSH, durch die so genannte Rekonstruktionsmethode. Dabei werden beispielsweise bereits vorhandene LDH in Pulverform für einige Stunden auf einige hundert Grad Celsius erhitzt (beispielsweise 3 Stunden auf 450°C). Die LDH Struktur kollabiert und flüchtige und/oder thermisch zersetzbare interkalierten Anionen sowie das Kristallwasser können entweichen. Durch die extreme Behandlung zerfällt beispielsweise das Karbonat, wobei Kohlendioxid und Wasser entweichen. Zurück bleibt beispielsweise eine amorphe Mischung von Metalloxiden. Durch Zugabe von wässrigen Lösungen der zu interkalierenden Anionen unter Schutzgasatmosphäre wird die LDH Struktur wiederhergestellt und es entstehen die gewünschten LDH.

Der Vollständigkeit halber sei noch auf die so genannte anionische Austauschreaktionsmethode (anionic exchange reaction method) verwiesen. Hierbei wird die Eigenschaft der LDH, interkalierte Anionen austauschen zu können, ausgenutzt. Die Schichtstruktur der kationischen gemischten Metallhydroxidschichten der LDH bleibt dabei erhalten. Zunächst werden bereits hergestellte LDH, beispielsweise nach der Kopräzipitationsmethode unter Schutzgasatmosphäre hergestellte LDH, welche im Vergleich zum Karbonat gut austauschbare Anionen wie Chlorid oder Nitrat enthalten, in wässriger alkalischer Lösung unter Schutzgasatmosphäre suspendiert. Anschließend wird diese Suspension oder Aufschlämmung unter Schutzgasatmosphäre zu einer wässrigen alkalischen Lösung der zu interkalierenden organischen Anionen gegeben und für eine gewisse Zeit gerührt, wobei der genannte anionische Austausch stattfindet. Bei der anionischen Austauschreaktionsmethode handelt es sich demnach nicht um eine eigentliche Herstellungsmethode von LDH im Sinne der vorliegenden Erfindung, sondern um eine Methode, bei der bereits hergestellte LDH modifiziert beziehungsweise abgeändert werden. Insbesondere wird dabei nicht die typische Schichtstruktur von schichtförmigen Hydroxiden hergestellt beziehungsweise vorübergehend zerstört.

Im Rahmen der vorliegenden Erfindung werden die schichtförmigen Hydroxide in Gegenwart des Polyesters (A) hergestellt. Bevorzugt werden die schichtförmigen Hydroxide dabei durch die direkte Kopräzipitationsmethode oder Alkoholroute, ganz besonders bevorzugt durch die Alkoholroute hergestellt.

Dies bedeutet also, dass während der Herstellung der schichtförmigen Hydroxide mindestens ein Polyester (A), bevorzugt genau ein Polyester (A), im selben Reaktionsgefäß vorliegt wie die zur Herstellung der schichtförmigen Hydroxide notwendigen beziehungsweise eingesetzten Edukte. Dabei kann der Polyester (A) von Beginn an in dem jeweiligen Reaktionsgefäß vorhanden sein. Das heißt der Polyester wird beispielsweise vorgelegt und die Edukte zur Herstellung von schichtförmigen Hydroxiden, das heißt insbesondere anorganische Metallsalze sowie bevorzugt ein Reaktionsmedium wie Wasser oder im Rahmen der Alkoholroute ein Alkohol, werden hinzugefügt. Oder aber die Edukte und das Reaktionsmedium, bevorzugt Wasser oder im Rahmen der Alkoholroute ein Alkohol wie Ethanol oder 2-Butoxyethanol, werden vorgelegt, wobei dann anschließend der Polyester (A) hinzugefügt wird, jedoch bevor die schichtförmigen Hydroxide hergestellt werden. Möglich ist auch, dass ein Teil der Edukte vorgelegt wird, dann der Polyester (A) hinzugefügt wird, und anschließend der Rest der Edukte hinzugefügt wird. Möglich ist auch, alle Edukte sowie den Polyester (A) zeitgleich in das Reaktionsmedium zu überführen.

Es hat sich überraschenderweise gezeigt, dass auf die genannte Weise nicht nur LDH hergestellt werden können, sondern dass Zusammensetzungen, die auf diese Weise hergestellt werden, eine gute Feinverteilung von LDH aufweisen. Das heißt also, die LDH haben eine deutlich geringere Neigung zur Agglomeration, woraus die einleitend beschriebenen Vorteile resultieren. Die LDH beziehungsweise die erfindungsgemäßen Zusammensetzungen können auch ohne den weiteren Zusatz von anorganischen oder organischen Anionen oder deren saurer Vorstufen hergestellt werden. Das heißt also, dass außer den in den als Edukte eingesetzten Metallsalzen vorhandenen Anionen und den grundsätzlich in zur Synthese vorteilhaft eingesetzten basischen und wässrigen Reaktionsmedien vorhandenen Hydroxidionen keine weiteren typischen Anionen vorhanden sind. Ohne an eine bestimmte Theorie gebunden zu sein wollen, scheint der carboxyfunktionelle Polyester (A), dessen Carboxyfunktionen in dem basischen, wässrigen Reaktionsmedium deprotoniert sind (beziehungsweise als Ammoniumsalz eingesetzt wird), als ebenfalls anionisches Molekül zumindest teilweise in die Zwischenschichten der schichtförmigen Hydroxide eingelagert zu werden. Der Polyester beziehungsweise die Carboxylatgruppen können also in dieser Sichtweise ebenfalls als Edukte zur Herstellung von LDH angesehen werden. Überaschenderweise gelingt also trotz des polymeren Charakters des Polyesters (A) nicht nur die grundsätzliche Synthese der schichtförmigen Hydroxide, sondern diese sind sogar noch fein verteilt.

Im Rahmen der vorliegenden Erfindung hat sich gezeigt, dass der Einsatz der bereits oben genannten direkten Kopräzipitationsmethode als vorteilhaft anzusehen ist. Von Vorteil ist es dabei, wenn man unter Schutzgasatmosphäre, das heißt unter Sauerstoffausschluss beziehungsweise Ausschluss atmosphärischer Bedingungen, die zur Herstellung der schichtförmigen Hydroxide einzusetzenden Metallsalze oder einen Teil der Metallsalze in Form einer wässrigen Lösung zu einer vorlegten wässrigen, basischen Lösung enthaltend Polyester (A) oder Polyester (A) und die übrigen Metallsalze tropft und dabei durch kontrollierte Zugabe einer Base, beispielsweise Natronlauge oder Ammoniumhydroxid, den pH-Wert konstant hält. Selbstverständlich kann das Reaktionsmedium auch noch andere Komponenten enthalten. Beispielhaft sei auf bei der Synthese des Polyesters anfallende Restanteile von typischen organischen Lösemitteln verwiesen oder weitere anorganische und/oder organische Anionen. Um eine kontrollierte und effektive Kristallisation zu erreichen, werden die Metallsalzlösungen vorteilhaft langsam, das heißt je nach Konzentrationen und Mengen der zuzutropfenden und vorzugelegenden Lösungen, innerhalb von etwa 1 bis 10 Stunden, insbesondere 2 bis 5 Stunden, zugetropft. Nach vollständigem Zutropfen erfolgt dann vorteilhafterweise eine Alterung beziehungsweise ein weiteres Rühren der Suspension von etwa 1 Stunde bis zu 10 Tagen, insbesondere zwischen 2 und 24 Stunden, um einen möglichst vollständigen Umsatz (effektive Kristallisation) und eine zufriedenstellende Feinverteilung zu gewährleisten.

Der pH-Wert bei der Herstellung der schichtförmigen Hydroxide gemäß direkter Kopräzipitationsmethode wird vorteilhaft von größer 7 bis 12 gewählt und dabei während der gesamten Synthese konstant gehalten. Je nach gewünschter Zusammensetzung (beispielsweise Wahl der metallischen Kationen $M^{2+}/M^{3+}$) ergibt sich in der Regel ein optimaler pH-Wert, der vom Fachmann auf einfache Weise angepasst werden kann. Grundsätzlich bevorzugte pH-Wertbereiche liegen aber zwischen 8 und 11.

Als nochmals bevorzugter hat sich im Rahmen der vorliegenden Erfindung die Anwendung der Alkoholroute gezeigt. Das heißt es ist bevorzugt, dass die LDH in Gegenwart des Polyesters (A) in einem basischen Reaktionsmedium enthaltend mindestens einen Alkohol hergestellt werden. Bevorzugte Alkohole sind Ethanol und 2-Butoxyethanol, insbesondere 2-Butoxyethanol. Das Reaktionsmedium ist basisch, um die Herstellung der Hydroxide aus den Metallsalzen zu ermöglichen. Das Reaktionsmedium umfasst bevorzugt eine Mischung aus einem Alkohol und Wasser, wobei das Gewichtsverhältnis Alkohol zu Wasser bevorzugt von 1,0 bis 5,0, insbesondere 1,5 bis 3,0 liegt, der Alkohol also bevorzugt im Überschuss vorliegt. Bevorzugt wird der basische Charakter des Reaktionsmediums durch Zusatz einer basischen wässrigen Lösung zu dem Alkohol oder zu einer Mischung aus Wasser und einem Alkohol erreicht.

In einer besonders bevorzugten Ausführungsform wird zunächst ein anorganisches Salz beziehungsweise eine Mischung anorganischer Salze der in die schichtförmigen Hydroxide einzubauenden metallischen Kationen unter Einhaltung der erforderlichen und/oder gewünschten Verhältnisse (Stöchiometrien) in einer alkoholischen Lösung enthaltend mindestens einen Polyester (A) gelöst. Zum Lösen der Salze kann die Mischung, je nach Löslichkeitsverhältnissen, bei Raumtemperatur oder erhöhter Temperatur von bevorzugt 60 bis 90°C gerührt werden. Anschließend erfolgt die Zugabe von Wasser und die Einstellung des basischen pH-Werts. Dann erfolgt vorteilhafterweise eine Alterung beziehungsweise ein weiteres Rühren der Suspension über einen Zeitraum von beispielsweise 1 Stunde bis zu 10 Tagen, insbesondere zwischen 2 und 24 Stunden, um einen möglichst vollständigen Umsatz und eine zufriedenstellende Feinverteilung zu gewährleisten.

Selbstverständlich können bei der Herstellung der schichtförmigen Hydroxide neben dem Polyester (A), den in den Metallsalzen vorhandenen Anionen und den im basischen, wässrigen Reaktionsmedium ohnehin vorhandenen Hydroxidionen auch noch weitere Anionen vorhanden sein. Beispielsweise kann, sofern nicht unter Schutzgas gearbeitet wird, zumindest anteilig Karbonat enthalten sein und damit auch in die LDH eingelagert werden. Möglich ist auch, dass weitere anorganische oder organische Anionen bei der Herstellung vorhanden sind. Von Vorteil ist aber, wenn keine weiteren Anionen vorhanden sind. Dies bedeutet, dass abgesehen von den durch die Metallsalze vorhandenen Anionen, dem Polyester (A) und den jedenfalls vorhandenen Hydroxidionen keine weiteren Anionen enthalten sind.

Als Metallsalze zur Herstellung der schichtförmigen Hydroxide können an sich beliebige Salze eingesetzt werden. Bevorzugte Salze enthalten neben den bevorzugten Metallkationen, das heißt dem einwertigen metallischen Kation $Li^+$, den zweiwertigen metallischen Kationen $M2^{2+}$ ausgewählt aus der Gruppe bestehend aus $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ und Mischungen davon, bevorzugt $Zn^{2+}$, $Mg^{2+}$, $Ca^{2+}$ und Mischungen davon, ganz besonders bevorzugt $Zn^{2+}$ und/oder $Mg^{2+}$, insbesondere $Zn^{2+}$ und dreiwertigen metallischen Kationen $M3^{3+}$ ausgewählt aus der Gruppe bestehend aus $Al^{3+}$, $Bi^{3+}$, $Fe^{3+}$, $Cr^{3+}$, $Ga^{3+}$, $Ni^{3+}$, $Co^{3+}$, $Mn^{3+}$, Anionen ausgewählt aus der Gruppe bestehend aus Carbonat, Nitrat, Sulfat, Chlorid, Hydroxid, Oxid und Acetat, bevorzugt Hydroxid und Acetat.

Besonders vorteilhaft werden allerdings keine Carbonate als Metallsalze eingesetzt, um somit die vornehmliche Einlagerung von Carbonat zu unterbinden.

Als Base zur Einstellung des basischen pH-Wertes können ebenfalls an sich beliebige, dem Fachmann bekannte Komponenten eingesetzt werden. Beispielhaft sei auf Natronlauge und Ammoniumhydroxid verwiesen.

In einer ganz besonders bevorzugten Ausführungsform werden die Metallsalze und die Basen so ausgewählt, dass nach der Herstellung der erfindungsgemäßen Zusammensetzung keine aus den Metallsalzen und Basen stammenden Fremdkomponenten mehr in der Zusammensetzung verbleiben oder diese Fremdkomponenten dergestalt sind, dass sie auf einfache Weise durch Verdampfungsprozesse und ohne aufwendige Waschprozesse aus der Zusammensetzung entfernt werden können.

Werden solche Fremdkomponenten nicht entfernt, können diese wiederum Unverträglichkeiten in beispielsweise Beschichtungsmitteln erzeugen, sodass oft nur die aufwendige Aufreinigung bleibt. Als nicht leicht entfernbare Fremdkomponenten werden beispielsweise Nitrate, Chloride oder Sulfate bezeichnet, die nach der Herstellung, beispielsweise in Form vom Natriumchlorid, in der Zusammensetzung verbleiben und auch nicht destillativ entfernt werden können.

Als leicht durch Verdampfungsprozesse entfernbare Komponente wird beispielsweise Ammoniak bezeichnet, der durch den bekanntermaßen niedrigen Dampfdruck schon bei leichter Temperaturerhöhung der erfindungsgemäßen Zusammensetzung auf beispielsweise 40 bis 60°C entfernt werden kann. Ähnliche Erwägungen gelten für Essigsäure, welche auf den Einsatz von Metallacetaten zurückgeht. Auch die Essigsäure wird spätestens bei der Härtung einer Beschichtungszusammensetzung enthaltend die erfindungsgemäßen Zusammensetzungen entweichen und demnach nicht als Fremdkomponente im System verbleiben. Keine Fremdkomponenten, die auf die Metallsalze zurückgehen, bleiben beispielsweise zurück, wenn als Metallsalze Hydroxide und/oder Oxide eingesetzt werden.

Überraschenderweise hat sich trotz der in der Literatur ganz überwiegend zur akzeptablen Herstellung von schichtförmigen Hydroxiden vorgeschlagenen beziehungsweise ausschließlich eingesetzten Nitrate, Sulfate und/oder Chloride gezeigt, dass in Anwesenheit des Polyesters (A) auf diese Salze verzichtet werden kann und trotzdem schichtförmige Hydroxide erhalten werden. Insbesondere durch den Einsatz der Alkoholroute werden auch bei Einsatz der genannten bevorzugten Metallsalze und Basen Zusammensetzungen erreicht, die feinverteilte schichtförmige Hydroxide enthalten.

Zur Herstellung der schichtförmigen Hydroxide, insbesondere im Rahmen der direkten Kopräzipitationsmethode, werden demnach im Rahmen der vorliegenden Erfindung als Metallsalze bevorzugt Hydroxide, Acetate und Oxide der oben genannten bevorzugten Metalle und als Base bevorzugt Ammoniumhydroxid eingesetzt.

Die erfindungsgemäßen Zusammensetzungen enthalten mindestens ein schichtförmiges Hydroxid (B) in besonders gut ausgeprägter Feinverteilung sowie den Polyester (A). Neben diesen Komponenten können noch weitere Komponenten enthalten sein; insbesondere ist bevorzugt Wasser als Lösungsmittel enthalten. Die erfindungsgemäßen Zusammensetzungen sind also bevorzugt wässrige Zusammensetzungen.

Die erfindungsgemäßen Zusammensetzungen sind demnach sehr gut als Beschichtungsmittel beziehungsweise zur Herstellung von Beschichtungsmitteln, insbesondere solchen auf Basis polymerer Bindemittel, beispielsweise Grundierungsmitteln, Füllern und Wasserbasislacken geeignet. Dies bedeutet, dass die erfindungsgemäßen Zusammensetzungen, je nach bereits enthaltenen weiteren Bestandteilen oder je nach noch hinzuzufügenden Bestandteilen, Beschichtungsmittel sind oder zur Herstellung solcher Beschichtungsmittel geeignet sind. Demnach ist auch die Verwendung der erfindungsgemäßen Zusammensetzung als Beschichtungsmittel Gegenstand der vorliegenden Erfindung. Dabei können die Zusammensetzungen, insbesondere die enthaltenen schichtförmigen Hydroxide, ihre vorteilhaften Eigenschaften wie beispielsweise eine Verbesserung des Korrosionsschutzes und/oder eine Erhöhung der mechanischen Beständigkeit, insbesondere Steinschlagfestigkeit, und/oder die gezielte Beeinflussung von optischen Eigenschaften bewirken. Gleichzeitig wird aber der nachteilige Agglomerationseffekt verhindert oder deutlich herabgesetzt, sodass die damit einhergehenden negativen Eigenschaften wie die Bewirkung eines teilweise inhomogenen Beschichtungsfilms verhindert werden können. Zudem können die durch Ausbluten von Anionen erzeugten Unverträglichkeiten verhindert werden, obwohl gleichzeitig die Agglomeration unterbunden wird und die LDH mit (potentiell) anionischen polymeren Bindemitteln kombiniert werden können. Die aus den erfindungsgemäßen Zusammensetzungen hergestellten Beschichtungsmittel beziehungsweise die als Beschichtungsmittel verwendeten erfindungsgemäßen Zusammensetzungen enthalten in der Regel neben dem Polyester (A), den LDH und bevorzugt Wasser noch weitere, typische Lackbestandteile. Dabei kann es sich insbesondere um typische Vernetzungsmittel, weitere typische polymere Bindemittel, die (potentiell) anionische Gruppen enthalten können oder auch frei von diesen seien können und weitere typische Lackadditive sowie organische Lösemittel handeln.

Im Folgenden soll die Erfindung anhand von Beispielen erläutert werden.

**Beispiele**

Alle im Rahmen der Beispiele angegebenen Messdaten wurden, sofern nicht anders angegeben, nach den in der allgemeinen Beschreibung genannten Bestimmungsmethoden erhalten.

1. Herstellung von erfindungsgemäß einzusetzenden Polyestern

1.1 Herstellung eines ersten Polyesters (A) (A-1)

Ein Polyester (A) wird wie folgt hergestellt. In einen Reaktor mit Ankerrührer, Stickstoffeinlass und Wasserabscheider mit Kopftemperaturmesseinrichtung und aufgesetzter Füllkörperkolonne mit Rückflusskühler werden 44,40 g

vollständig hydriertes Bisphenol-A, 7,07 g Cyclohexan-1,2-dicarbonsäureanhydrid, 23,41 g dimere Fettsäure (Pripol®1012, Firma Unichema, basierend auf ungesättigten C-18-Fettsäurederivaten mit einem Dimerengehalt von mindestens 97 Gew.-%, Trimerengehalt höchstens 1 Gew.-%, Monomerengehalt höchstens Spuren) eingebracht. Der Reaktorinhalt wird in einer Stickstoffatmosphäre unter Rühren solange auf 190 Grad C erhitzt bis die Reaktionsmischung eine Säurezahl von 8-12 mg KOH/g erreicht. Die Kopftemperatur sollte 100 °C nicht überschreiten. Nach 9 Tagen ist eine Säurezahl von 11,4 mg KOH/ g erreicht und die Reaktionsmischung wird abgekühlt. Es werden 1,7 ml Wasser aus der Kondensationsreaktion aufgefangen. Die Ausbeute beträgt 72,7 g festes Harz. Das Harz besitzt eine OH-Zahl von 143 mg KOH/g, ein massenmittleres Molekulargewicht von 1884 g/mol und ein zahlenmittleres Molekulargewicht von 753 g/mol.

Zur Harzschmelze des erhaltenen, auf 80°C erwärmten Polyesters werden 27 g 2-Butanon zugegeben und in einem Reaktor mit Ankerrührer, Stickstoffeinlass und Rückflusskühler unter Rühren gelöst und 35,7 g 2-Octenylbernsteinsäureanhydrid (0,9 Äquivalente in Bezug auf die molare Menge an Hydroxylgruppen im eingesetzten Polyester (B1)) zugegeben. Die Mischung wird in einer Stickstoffatmosphäre auf 95 Grad C erhitzt und unter Rückfluss bei dieser Temperatur 18 Stunden gerührt. Die so erhaltene klare farblose Lösung besitzt einen nichtflüchtigen Anteil von 68,4 Gew.-% (Anteil des Polyesters (A)). Die Säurezahl beträgt 97 mg KOH/g. Das Harz besitzt eine OH-Zahl von 18 mg KOH/g, ein gewichtsmittleres Molekulargewicht von 2218 g/mol und ein zahlenmittleres Molekulargewicht von 1181 g/mol.

Der Wasserabscheider wird durch eine Destillationsbrücke ersetzt und die Polyesterlösung bei 95°C unter Stickstoff und Rühren tropfenweise mit 10,19 g N,N-Dimethylamino-2-ethanol versetzt, entsprechend einem Neutralisationsgrad von 0,95 der über die Säurezahl ermittelten Carboxylgruppen des zuletzt erhaltenen Polyester. Zu der auf 80°C abgekühlten Harzlösung werden mit einem Massenstrom von 2 g pro Minute 60 g deionisiertes Wasser (Raumtemperatur) gegeben und anschliessend bei 80°C unter Rühren und unter Vakuum ein 2-Butanon Wasser Gemisch abdestilliert bis ein Restgehalt von 2-Butanon in der verbleibenden Polyesterlösung von < 0,5 Gew.-% (bestimmt über gaschromatographische Analyse) erreicht ist. Die erhaltene wässrige Polyesterlösung besitzt einen nichtflüchtigen Anteil von 72,3 Gew.-%, einen Gehalt an Säuregruppen von 1,60 meq/g, einen Gehalt an Base von 1,48 meq/g sowie einen 2-Butanon Gehalt von 0 Gew.-%.

1.2 Herstellung eines zweiten Polyesters (A) (A-2)

In einen Reaktor mit Ankerrührer, Stickstoffeinlass, Rückflußkühler und Destillationsbrücke werden 10,511 g 1,6-Hexandiol, 9,977 g 2,2-Dimethyl-1,3-propandiol, 6,329 g Cyclohexan-1,2-dicarbonsäureanhdrid, 23,410 g dimere Fettsäure (Pripol®1012, Firma Unichema, Dimerengehalt mindestens 97 Gew.-%, Trimerengehalt höchstens 1 Gew.-%, Monomerengehalt höchstens Spuren) und 0,806 g Cyclohexan eingebracht. Der Reaktorinhalt wird in einer Stickstoffatmosphäre unter Rühren solange auf 220 Grad C erhitzt bis die Reaktionsmischung eine Säurezahl nach DIN EN ISO 3682 von 8 bis 12 mg KOH/g nichtflüchtigen Anteil und eine Viskosität von 3,7 bis 4,2 dPas (gemessen als 80 Gew.-%-Lösung der Reaktionsmischung in 2-Butoxyethanol bei 23 Grad C in einem Kegel-Platte-Viskosimeter der Fa. ICI) aufweist. Danach wird das Cyclohexan abdestilliert und die Reaktionsmischung auf 160 Grad C abgekühlt.

Hiernach werden zu der Reaktionsmischung 10,511 g 1,2,4-Benzoltricarbonsäureanhydrid zugefügt, auf 160 Grad C aufgeheizt und bei dieser Temperatur solange gehalten bis der resultierende Polyester eine Säurezahl nach DIN EN ISO 3682 von 38 mg KOH/g nichtflüchtigen Anteil, eine Hydroxylzahl nach DIN EN ISO 4629 von 81 mg KOH/g nichtflüchtigen Anteil, ein gewichtsmittleres Molekulargewicht Mw von etwa 19.000 Dalton (bestimmt mittels Gelpermeationschromatographie nach den Normen DIN 55672-1 bis -3 mit Polystyrol als Standard) und eine Viskosität von 5,0 bis 5,5 dPas (gemessen als 50 Gew.-%-Lösung der Reaktionsmischung in 2-Butoxyethanol bei 23 Grad C in einem Kegel-Platte-Viskosimeter der Fa. ICI) aufweist.

Die Reaktionsmischung wird auf 130 Grad C abgekühlt und es werden 2,369 g N,N-Dimethylamino-2-ethanol zugefügt. Nach einer weiteren Abkühlung auf 95 Grad C werden 17,041 entionisiertes Wasser und 19,046 g 2-Butoxyethanol zugefügt. Die resultierende Dispersion wird durch Zugabe von weiterem N,N-Dimethylamino-2-ethanol und entionisiertem Wasser auf einen pH-Wert von 7,4 bis 7,8 und einen nichtflüchtigen Anteil von 60 Gew.-% eingestellt.

2. Herstellung von erfindungsgemäßen Zusammensetzungen enthaltend schichtförmige Hydroxide (B) und Polyester (A)

2.1 Herstellung des doppelten Hydroxids $Zn_2Al(OH)_6*(CH_3CO_2)$ in Gegenwart von Polyester (A-1) (Zusammensetzung E1)

3,00 g der unter 1.1 erhaltenen Lösung von Polyester (A-1), 0,137 g (0,846 mmol) basisches Aluminiumacetat $Al(OH)(CH_3CO_2)_2$ und 0,3712 g (0,169 mmol) Zinkacetatdihydrat, entsprechend eines Verhältnisses Zn/Al = 2, sowie 25,9 mL 2-Butoxyethanol werden in einem 100 mL Dreihalskolben, ausgestattet mit magnetischen Rührer und einem Rückflusskühler, unter Rühren im Ölbad auf 70°C erhitzt. Nach 90 Minuten werden unter Rühren 11,4 mL deionisiertes

Wasser zugegeben und der pH Wert der Mischung mit einer 30 prozentigen wässrigen Lösung von Ammoniumhydroxid auf einen Wert von acht eingestellt. Es wird über Nacht bei 70°C gerührt, danach im Ölbad auf Raumtemperatur abgekühlt. Die Mischung wird bei 4.500 upm 10 Minuten lang zentrifugiert, die Flüssigkeit verworfen und das Produkt isoliert.

2.2 Herstellung des doppelten Hydroxids $Zn_2Al(OH)_6*(CH_3CO_2)$ in Gegenwart von Polyester (A-2) (Zusammensetzung E2)

Es wird identisch zu Versuch 2.1 verfahren. Statt 3,00 g der unter 1.1 erhaltenen Lösung von Polyester (A-1) werden 3,00 g der unter 1.2 erhaltenen Dispersion von Polyester (A-2) eingesetzt.

2.3 Herstellung des einfachen Hydroxids $Zn_5(OH)_8*(CH_3CO_2)$ (LSH) in Gegenwart von Polyester (A-1) (Zusammensetzung E3)

3,00 g der unter 1.1 erhaltenen Lösung von Polyester (A-1) und 0,533 g (2,43 mmol) Zinkacetatdihydrat sowie 13,37 mL 2-Butoxyethanol werden in einem 100 mL Dreihalskolben, ausgestattet mit magnetischen Rührer und einem Rückflusskühler, unter Rühren bei Raumtemperatur vermischt. Nach 90 Minuten werden unter Rühren 5,89 mL deionisiertes Wasser zugegeben und der pH Wert der Mischung mit einer 30 prozentigen wässrigen Lösung von Ammoniumhydroxid auf einen Wert von acht eingestellt. Es wird über Nacht bei Raumtemperatur gerührt, danach die Mischung bei 4.500 upm 10 Minuten lang zentrifugiert, die Flüssigkeit verworfen und das Produkt isoliert.

2.4 Herstellung des einfachen Hydroxids $Zn_5(OH)_8*(CH_3CO_2)$ (LSH) in Gegenwart von Polyester (A-2) (Zusammensetzung E4)

Es wird identisch zu Versuch 2.3 verfahren. Statt 3,00 g der unter 1.1 erhaltenen Lösung von Polyester (A-1) werden 3,00 g der unter 1.2 erhaltenen Dispersion von Polyester (A-2) eingesetzt.

3. Herstellung von nicht erfindungsgemäßen Zusammensetzungen enthaltend schichtförmige Hydroxide (B) und Polyestern (A)

3.1 Herstellung des doppelten Hydroxids $Zn_2Al(OH)_6*(CH_3CO_2)$ (LDH1)

1,370 g (8,46 mmol) basisches Aluminiumacetat $Al(OH)(CH_3CO_2)_2$ und 3,712 g (16,9 mmol) Zinkacetatdihydrat, entsprechend eines Verhältnisses Zn/Al = 2, sowie 259 mL 2-Butoxyethanol werden in einem 500 mL Dreihalskolben, ausgestattet mit magnetischen Rührer und einem Rückflusskühler, unter Rühren im Ölbad auf 80°C erhitzt. Nach 90 Minuten werden unter Rühren 50 mL deionisiertes Wasser zugegeben und der pH Wert der Mischung mit einer 30 prozentigen wässrigen Lösung von Ammoniumhydroxid auf einen Wert von acht eingestellt. Es wird über Nacht bei 80°C gerührt, danach im Ölbad auf Raumtemperatur abgekühlt. Die Mischung wird bei 4.500 upm 10 Minuten lang zentrifugiert, die Flüssigkeit verworfen und das Produkt dreimal in jeweils 50 mL deionisiertem Wasser aufgerührt und bei 4.500 upm 10 Minuten lang zentrifugiert. Die anfallende wässrige Paste weist einen LDH Gehalt von 13,79 Gewichts-% auf.

3.2 Herstellung des einfachen Hydroxids $Zn_5(OH)_8(CH_3CO_2)$ (LSH1)

5,328 g (24,3 mmol) Zinkacetat dihydrat sowie 134 mL 2-Butoxyethanol werden in einem 250 mL Dreihalskolben, ausgestattet mit magnetischen Rührer und einem Rückflusskühler, eingewogen. Nach 90 minutigem Rühren bei Raumtemperatur werden unter Rühren 59 mL deionisiertes Wasser zugegeben und der pH Wert der Mischung mit einer 30 prozentigen wässrigen Lösung von Ammoniumhydroxid auf einen Wert von acht eingestellt. Es wird über Nacht bei Raumtemperatur gerührt, danach bei 4.500 upm 10 Minuten lang zentrifugiert, die Flüssigkeit verworfen und das Produkt dreimal in jeweils 50 mL deionisiertem Wasser aufgerührt und bei 4.500 upm 10 Minuten lang zentrifugiert. Die anfallende wässrige Paste weist einen LSH Gehalt von 12,12 Gewichts-% auf.

3.3 Herstellung der Mischungen enthaltend Polyester (A) und schichtförmige Hydroxide (B)

Physikalischen Mischungen aus den unter 3.1 und 3.2 beschriebenen Pasten enthaltend schichtförmige Hydroxide (B) sowie den unter 1.1 und 1.2 beschriebenen wässrigen Mischungen enthaltend Polyester (A) wurden in Kunststoffbechern durch Verrühren von jeweils eine Hydroxid (B) und einem Polyester (A) mittels eines Spatels unter Umgebungsbedingungen hergestellt. Es wird so lange gerührt bis visuell wahrnehmbar homogene Mischungen vorliegen (typisch fünf bis zehn Minuten). Die Einwaagen der Versuche befinden sich in Tabelle 1.

Tabelle 1: Vergleichszusammensetzungen enthaltend Polyester (A) und schichtförmige Hydroxide (B)

| Beispiel | V1 | V2 | V3 | V4 |
|---|---|---|---|---|
| Polyester A-1 (1.1) | 3,845 g | 2,294 g | | |
| Polyester A-2 (1.2) | | | 3,845 g | 1,969 g |
| LDH-1 (3.1) | | 1,66 g | | 1,426 g |
| LSH-1 (3.2) | 3,168 g | | 3,168 g | |

Die Massenverhältnisse von schichtförmigem Hydroxid zu Polymer basierend auf den nichtflüchtigen Anteilen der Pasten beziehungsweise Lösungen sind in Tabelle 2 dargestellt im Vergleich zu den kalkulierten Massenverhältnissen der entsprechenden erfindungsgemäßen Beispiele. Die Berechnung der Massen der schichtförmigen Hydroxide basiert auf der Annahme von einem Umsatz von 100 % entsprechend den angegebenen Summenformeln in den Beispielen 2 und 3 ohne Berücksichtigung von interkaliertem und adsorbiertem Wasser.

Tabelle 2: Massenverhältnisse der schichtförmigen Hydroxide zu Polymer der Vergleichszusammensetzungen im Vergleich zu den analogen Massenverhältnissen der entsprechenden erfindungsgemäßen Beispiele

| **Beispiele, Vergleich der Massenverhältnisse** | | | | |
|---|---|---|---|---|
| **Vergleichsbeispiele** | **V1** | **V2** | **V3** | **V4** |
| $m_{(Hydroxid)}$ / $M_{(Polymer)}$ | 0,138 | 0,138 | 0,166 | 0,166 |
| **Erfindungsgemäße Beispiele** | **E3** | **E1** | **E4** | **E2** |
| $m_{(Hydroxid)}$ / $M_{(Polymer)}$ | 0,13 | 0,125 | 0,157 | 0,15 |
| $m_{(LSH, LDH)}$, 1 00% Umsatz, ohne $H_2O$ [g] | 0,283 | 0,27 | 0,283 | 0,27 |
| $m_{(Polymer)}$ [g] | 2,169 | 2,169 | 1,8 | 1,8 |

4. Charakterisierung der erfindungsgemäßen Zusammensetzungen und Vergleichszusammensetzungen mittels Röntgendiffraktion

Tabelle 3 gibt nochmal einen Überblick über die untersuchten Systeme hinsichtlich der darin enthaltenen Komponenten (A) und (B). Innerhalb der erfindungsgemäßen Systeme E wurden die schichtförmigen Hydroxide in Anwesenheit eines Polyesters hergestellt (Beispiele 2.1 bis 2.4, Zusammensetzungen E1 bis E4). In den Vergleichssystemen erfolgte erst die separate Herstellung der schichtförmigen Hydroxide, bevor der Polyester hinzugegeben wurde (Zusammensetzungen V1 bis V4).

Tabelle 3: Untersuchte Systeme

| E1 | E2 | E3 | E4 | V1 | V2 | V3 | V4 |
|---|---|---|---|---|---|---|---|
| Polyester (A-1) | | Polyester (A-1) | | Polyester (A-1) | Polyester (A-1) | | |
| | Polyester (A-2) | | Polyester (A-2) | | | Polyester (A-2) | Polyester (A-2) |
| LDH (Zn/Al) | LDH (Zn/Al) | | | | LDH (Zn/Al) | | LDH (Zn/Al) |
| | | LSH (Zn) | LSH (Zn) | LSH (Zn) | | LSH (Zn) | |
| Figur 3 | Figur 4 | Figur 5 | Figur 6 | Figur 7 | Figur 8 | Figur 9 | Figur 10 |

Die Zusammensetzungen E1 bis E4 und V1 bis V4 wurden mit dem Gerät D501 der Firma Siemens untersucht. Zusätzlich wurden die Hydroxide LDH 1 (Beispiel 3.1) und LSH1 (Beispiel 3.2) ohne den Zusatz eines Polyesters untersucht. Die Proben wurden mittels eines Spatels auf einem Glasträger aufgetragen. Als Primärstrahl diente die Cu

Ka Emission ($\lambda$ = 1,5406 Å) einer Kupferröhre (Anregung: 35 kV bei 30 mA). Die gestreute Strahlung wurde im Winkelbereich 2 Theta von 2 - 70° aufgezeichnet (0,08° Schrittweite, vier Sekunden Messzeit pro Stufe).

Die erhaltenen Streukurven (Intensität (= Intensity) über den Streuwinkel 2Theta) sind in den Figuren 1 bis 10 dargestellt (vergleiche auch Korrelation in Tabelle 3 für die Figuren 3 bis 10). Die für einzelne Beispiele aufgeführten, sogenannten "korrelierten Reflexe für die Schichtung der Hydroxide" ergeben sich aus der Bragg'schen Bedingung für die Beugung von Röntgenstrahlen:

$$n \cdot \lambda = 2d \cdot sin\theta$$

mit:

n = Beugungsordnung (natürliche Zahl)
$\lambda$ = Wellenlänge der Röntgenstrahlung
d = Abstand der Gitterebenen (hier der Schichten)
$\theta$ = Winkel zwischen Röntgenstrahl und Gitterebenen (Schichten)

Die Proben der reinen schichtförmigen Hydroxide LDH 1 (Beispiel 3.1) und LSH 1 (Beispiel 3.2) zeigen intensive korrelierte Reflexe für Schichtung der Hydroxide (00l) an den Positionen 6,84°, 13,72°, 21° (LDH 1) und 6,49°, 13,03°, 19,94° (LSH 1), die Schichtabständen von d = 13,68 Å (LDH 1) und d = 12,98 Å (LSH 1) entsprechen. Typische Reflexe für schichtförmige Hydroxide bei Streuwinkeln um 35° sowie 60° stehen für Kationenabstände innerhalb der Schichten (0kl) bzw. (hk0).

Die Zusammensetzungen, in denen die schichtförmigen Hydroxide in Anwesenheit eines Polyesters (A) hergestellt wurden (in-situ-Systeme), zeigen die Reflexe bei hohen Streuwinkeln (um 35° sowie 60°), während im untersuchten Kleinwinkelbereich keine Reflexe (00l) (im Fall von E2 und E4) beziehungsweise neue korrelierte Reflexe bei kleineren Streuwinkeln (im Falle von E1 und E3) zu beobachten sind. Die Mischung E1 weist vier korrelierte Reflexe auf (3,59°, 5,38°, 7,20°, 9,12°), die einem Schichtabstand von d = 49 Å entsprechen. Für E3 werden fünf korrelierte Reflexe detektiert (3,87°, 5,77°, 7,65°, 9,58°, 11,5°), die einem Schichtabstand von d = 46 Å entsprechen.

Somit liegen exfolierte Schichten vor (in Gegenwart des Polyester (A-2), Systeme E2 und E4) beziehungsweise mit Polyester interkalierte (= aufgeweitete) Schichten in Gegenwart des Polyester (A-1) (Systeme E1 und E3). Letztere weisen einen gegenüber den acetathaltigen Hydroxiden (LDH 1 und LSH 1) größeren Schichtabstand auf. Dermaßen vereinzelte beziehungsweise stark separierte LDH und LSH Schichten stellen geeignete Ausgangsmaterialien für die Herstellung sogenannter Nanokomposite dar. Die schichtförmigen Hydroxide in diesen Systemen sind fein verteilt.

Demgegenüber weisen die Streukurven für die physikalischen Mischungen des schichtförmigen einfachen Hydroxids LSH 1 (Beispiele V1 und V3) darauf hin, dass keinerlei Interkalation oder gar Exfolierung der Schichten durch die Einwirkung eines Polyester (A) erfolgt. Die korrelierten Reflexe für die Schichtung entsprechen denen der eingesetzten acetathaltigen Hydroxide LSH 1.

Im Falle des schichtförmigen doppelten Hydroxids LDH 1 in Gegenwart des Polyester A-2 (System V4) werden nur geringe Unterschiede zu dem in-situ hergestellten Hydroxid beobachtet. Das doppelte schichtförmige Hydroxid LDH 1 interkaliert Polyester A-1 (Beispiel V2), da sieben korrelierte Reflexe für die Schichtung beobachtet (3,55°, 6,93°, 10,31°, 13,85°, 17,32°, 20,86°, 24,15°) werden, die einem Schichtabstand von d = 26 Å entsprechen. Diese Aufweitung des Schichtabstands ist somit deutlich geringer ausgeprägt als in den in-situ-Systemen.

Zusammenfassung:

Die Versuche zeigen, dass es die Herstellung von schichtförmigen Hydroxiden in Gegenwart von Polyestern (A) ermöglicht, vereinzelte (exfolierte) oder stark separierte (interkalierte) Schichten von schichtförmigen Hydroxiden zu erzielen. Demgegenüber zeigen physikalische Mischungen aus den ex-situ hergestellten schichtförmigen Hydroxiden und den Polymeren (A) nur vereinzelt eine Exfolierung oder Interkalation, letztere verbunden mit einer erheblich geringeren Schichtaufweitung. Die erfindungsgemäßen Zusammensetzungen sind also strukturell verschieden von den Zusammensetzungen des Stands der Technik. Zudem ist dieser Unterschied mit einem technischen Vorteil verknüpft. Ganz besonders ausgeprägt gilt der beschriebene Effekt der Feinverteilung für die bevorzugten Polyester (A) (hier gezeigt anhand des Polyesters (A-1)).

## Kurzbeschreibung der Abbildungen

Figur 1: Streukurve von LDH gemäß Beispiel 3.1.

Figur 2: Streukurve von LDH gemäß Beispiel 3.2.

Figur 3: Streukurve der Zusammensetzung E1.

Figur 4: Streukurve der Zusammensetzung E2.

Figur 5: Streukurve der Zusammensetzung E3.

Figur 6: Streukurve der Zusammensetzung E4.

Figur 7: Streukurve der Zusammensetzung V1.

Figur 8: Streukurve der Zusammensetzung V2.

Figur 9: Streukurve der Zusammensetzung V3.

Figur 10: Streukurve der Zusammensetzung V4.

**Patentansprüche**

1. Zusammensetzung enthaltend

   (A) mindestens einen carboxyfunktionellen Polyester mit einer Säurezahl bestimmt gemäß DIN EN ISO 3682 im Bereich von 20 bis 250 mg KOH/g, bei dessen Herstellung mindestens ein difunktionelles Monomer (a1) mit aliphatischen Gruppen mit 12 bis 70 Kohlenstoffatomen zwischen den funktionellen Gruppen eingesetzt wird, sowie
   (B) mindestens ein synthetisches schichtförmiges Hydroxid,

   **dadurch gekennzeichnet, dass** das mindestens eine schichtförmige Hydroxid (B) in Gegenwart des Polyesters (A) hergestellt wird.

2. Zusammensetzung nach Anspruch 1, **dadurch gekennzeichnet, dass** die aliphatischen Gruppen des mindestens einen bei der Herstellung des Polyesters (A) eingesetzten Monomers (a1) 13 bis 50 Kohlenstoffatome aufweist.

3. Zusammensetzung nach Anspruch 1 oder 2, **dadurch gekennzeichnet, dass** die die Monomere (a1) ausgewählt werden aus der Gruppe bestehend aus vollständig hydrierten Bisphenolen, dimeren aliphatischen Fettalkoholen und dimeren aliphatische Fettsäuren.

4. Zusammensetzung nach einem oder mehreren der Ansprüche 1 bis 3, **dadurch gekennzeichnet, dass** die Säurezahl des Polyesters (A) im Bereich von 25 bis 150 mg KOH/g liegt.

5. Zusammensetzung nach einem oder mehreren der Ansprüche 1 bis 4, **dadurch gekennzeichnet, dass** die schichtförmigen Hydroxide (B) ausgewählt werden aus der Gruppe bestehend aus schichtförmigen Doppelhydroxiden und schichtförmigen Einfachhydroxiden.

6. Zusammensetzung nach Anspruch 5, **dadurch gekennzeichnet, dass** die in den schichtförmigen Hydroxiden enthaltenen metallischen Kationen ausgewählt werden aus der Gruppe bestehend aus $Li^{+}$, $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$, $Al^{3+}$, $Bi^{3+}$, $Fe^{3+}$, $Cr^{3+}$, $Ga^{3+}$, $Ni^{3+}$, $Co^{3+}$ und/oder $Mn^{3+}$.

7. Zusammensetzung nach einem oder mehreren der Ansprüche 1 bis 6, **dadurch gekennzeichnet, dass** bei der Herstellung des Polyesters (A), bezogen auf die Gesamtmenge der bei der Herstellung des Polyesters (A) eingesetzten Monomere, mindestens 5 mol-% Monomere (a1) eingesetzt werden.

8. Zusammensetzung nach einem oder mehreren der Ansprüche 1 bis 7, **dadurch gekennzeichnet, dass** die schichtförmigen Hydroxide in einem basischen Reaktionsmedium enthaltend mindestens einen Alkohol, bevorzugt mindestens einen Alkohol und Wasser, hergestellt werden

**9.** Zusammensetzung nach einem oder mehreren der Ansprüche 1 bis 8, **dadurch gekennzeichnet, dass** die bei der Herstellung der schichtförmigen Hydroxide eingesetzten Metallsalze und Basen so ausgewählt werden, dass nach der Herstellung der Zusammensetzung keine aus den Metallsalzen und Basen stammenden Fremdkomponenten in der Zusammensetzung verbleiben oder diese Fremdkomponenten durch Verdampfungsprozesse und ohne Waschprozesse aus der Zusammensetzung entfernt werden können.

**10.** Zusammensetzung nach Anspruch 9, **dadurch gekennzeichnet, dass** die zur Herstellung der schichtförmigen Hydroxide eingesetzten Metallsalze Hydroxide, Acetate und/oder Oxide sind und die eingesetzte Base Ammoniumhydroxid ist.

**11.** Zusammensetzung nach einem oder mehreren der Ansprüche 1 bis 10, **dadurch gekennzeichnet, dass** zudem mindestens ein Vernetzungsmittel, mindestens ein vom Polyester (A) verschiedenes polymeres Bindemittel und/oder mindestens ein organisches Lösemittel enthalten ist.

**12.** Zusammensetzung nach einem oder mehreren der Ansprüche 1 bis 11, **dadurch gekennzeichnet, dass** es sich um ein wässriges Beschichtungsmittel handelt, welches vom Polyester (A) verschiedene polymere Bindemittel mit anionischen Gruppen enthält.

**13.** Verfahren zur Herstellung einer Zusammensetzung gemäß einem oder mehreren der Ansprüche 1 bis 12, bei dem in Gegenwart

(a) mindestens eines carboxyfunktionellen Polyesters (A) mit einer Säurezahl bestimmt gemäß DIN EN ISO 3682 im Bereich von 20 bis 250 mg KOH/g, bei dessen Herstellung mindestens ein difunktionelles Monomer (a1) mit aliphatischen Gruppen mit 12 bis 70 Kohlenstoffatomen zwischen den funktionellen Gruppen eingesetzt wird,
(b) mindestens ein synthetisches schichtförmiges Hydroxid hergestellt wird.

**14.** Verwendung einer Zusammensetzung gemäß einem oder mehreren der Ansprüche 1 bis 12 als Beschichtungsmittel.

## Claims

**1.** Composition comprising

(A) at least one carboxy-functional polyester having an acid number determined according to DIN EN ISO 3682 in the range from 20 to 250 mg KOH/g, prepared using at least one difunctional monomer (a1) with aliphatic groups having 12 to 70 carbon atoms between the functional groups,
and also
(B) at least one synthetic layered hydroxide,

**characterized in that** the at least one layered hydroxide (B) is prepared in the presence of the polyester (A).

**2.** Composition according to Claim 1, **characterized in that** the aliphatic groups of the at least one monomer (a1) used in preparing the polyester (A) have 13 to 50 carbon atoms.

**3.** Composition according to Claim 1 or 2, **characterized in that** the monomers (a1) are selected from the group consisting of fully hydrogenated bisphenols, dimeric aliphatic fatty alcohols, and dimeric aliphatic fatty acids.

**4.** Composition according to one or more of Claims 1 to 3, **characterized in that** the acid number of the polyester (A) is in the range from 25 to 150 mg KOH/g.

**5.** Composition according to one or more of Claims 1 to 4, **characterized in that** the layered hydroxides (B) are selected from the group consisting of layered double hydroxides and layered single hydroxides.

**6.** Composition according to Claim 5, **characterized in that** the metallic cations present in the layered hydroxides are selected from the group consisting of $Li^{+}$, $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$, $Al^{3+}$,

$Bi^{3+}$, $Fe^{3+}$, $Cr^{3+}$, $Ga^{3+}$, $Ni^{3+}$, $Co^{3+}$ and/or $Mn^{3+}$.

**7.** Composition according to one or more of Claims 1 to 6, **characterized in that** at least 5 mol% of monomers (a1) are used in preparing the polyester (A), based on the total amount of the monomers used in preparing the polyester (A).

**8.** Composition according to one or more of Claims 1 to 7, **characterized in that** the layered hydroxides are prepared in a basic reaction medium comprising at least one alcohol, preferably at least one alcohol and water.

**9.** Composition according to one or more of Claims 1 to 8, **characterized in that** the metal salts and bases used in preparing the layered hydroxides are selected such that after the composition has been prepared there are no extraneous components originating from the metal salts and bases remaining in the composition, or these extraneous components can be removed from the composition by evaporating operations and without washing operations.

**10.** Composition according to Claim 9, **characterized in that** the metal salts used for preparing the layered hydroxides are hydroxides, acetates and/or oxides, and the base used is ammonium hydroxide.

**11.** Composition according to one or more of Claims 1 to 10, **characterized in that** it further comprises at least one crosslinking agent, at least one polymeric binder other than the polyester (A), and/or at least one organic solvent.

**12.** Composition according to one or more of Claims 1 to 11, **characterized in that** it is an aqueous coating material which comprises polymeric binders other than the polyester (A), having anionic groups.

**13.** Process for producing a composition according to one or more of Claims 1 to 12, by preparing, in the presence of

(a) at least one carboxy-functional polyester (A) having an acid number determined according to DIN EN ISO 3682 in the range from 20 to 250 mg KOH/g, prepared using at least one difunctional monomer (a1) with aliphatic groups having 12 to 70 carbon atoms between the functional groups,
(b) at least one synthetic layered hydroxide.

**14.** Use of a composition according to one or more of Claims 1 to 12 as coating material.

## Revendications

**1.** Composition contenant :

(A) au moins un polyester à fonction carboxy ayant un indice d'acidité déterminé selon DIN EN ISO 3682 dans la plage allant de 20 à 250 mg KOH/g, lors de la fabrication duquel au moins un monomère bifonctionnel (a1) contenant des groupes aliphatiques de 12 à 70 atomes de carbone entre les groupes fonctionnels est utilisé, et
(B) au moins un hydroxyde synthétique en forme de couche,

**caractérisé en ce que** ledit au moins un hydroxyde en forme de couche (B) est fabriqué en présence du polyester (A).

**2.** Composition selon la revendication 1, **caractérisée en ce que** les groupes aliphatiques dudit au moins un monomère (a1) utilisé lors de la fabrication du polyester (A) comprennent 13 à 50 atomes de carbone.

**3.** Composition selon la revendication 1 ou 2, **caractérisée en ce que** les monomères (a1) sont choisis dans le groupe constitué par les bisphénols entièrement hydrogénés, les alcools gras aliphatiques dimères et les acides gras aliphatiques dimères.

**4.** Composition selon une ou plusieurs des revendications 1 à 3, **caractérisée en ce que** l'indice d'acidité du polyester (A) se situe dans la plage allant de 25 à 150 mg KOH/g.

**5.** Composition selon une ou plusieurs des revendications 1 à 4, **caractérisée en ce que** les hydroxydes en forme de couche (B) sont choisis dans le groupe constitué par les hydroxydes doubles en forme de couche et les hydroxydes simples en forme de couche.

**6.** Composition selon la revendication 5, **caractérisée en ce que** les cations métalliques contenus dans les hydroxydes en forme de couche sont choisis dans le groupe constitué par $Li^{+}$, $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$, $Al^{3+}$, $Bi^{3+}$, $Fe^{3+}$, $Cr^{3+}$, $Ga^{3+}$, $Ni^{3+}$, $Co^{3+}$ et/ou $Mn^{3+}$.

**7.** Composition selon une ou plusieurs des revendications 1 à 6, **caractérisée en ce qu'**au moins 5 % en moles de monomères (a1) sont utilisés lors de la fabrication du polyester (A), par rapport à la quantité totale des monomères utilisés lors de la fabrication du polyester (A).

**8.** Composition selon une ou plusieurs des revendications 1 à 7, **caractérisée en ce que** les hydroxydes en forme de couche sont fabriqués dans un milieu de réaction basique contenant au moins un alcool, de préférence au moins un alcool et de l'eau.

**9.** Composition selon une ou plusieurs des revendications 1 à 8, **caractérisée en ce que** les sels métalliques et les bases utilisés lors de la fabrication des hydroxydes en forme de couche sont choisis de sorte qu'après la fabrication de la composition, aucun composant étranger provenant des sels métalliques et des bases ne reste dans la composition, ou que ces composants étrangers puissent être éliminés de la composition par des procédés d'évaporation et sans procédés de lavage.

**10.** Composition selon la revendication 9, **caractérisée en ce que** les sels métalliques utilisés pour la fabrication des hydroxydes en forme de couche sont des hydroxydes, des acétates et/ou des oxydes, et la base utilisée est l'hydroxyde d'ammonium.

**11.** Composition selon une ou plusieurs des revendications 1 à 10, **caractérisée en ce qu'**au moins un agent de réticulation, au moins un liant polymère différent du polyester (A) et/ou au moins un solvant organique sont en outre contenus.

**12.** Composition selon une ou plusieurs des revendications 1 à 11, **caractérisée en ce qu'**il s'agit d'un agent de revêtement aqueux, qui contient des liants polymères différents du polyester (A), contenant des groupes anioniques.

**13.** Procédé de fabrication d'une composition selon une ou plusieurs des revendications 1 à 12, selon lequel, en présence

(a) d'au moins un polyester à fonction carboxy (A) ayant un indice d'acidité déterminé selon DIN EN ISO 3682 dans la plage allant de 20 à 250 mg KOH/g, lors de la fabrication duquel au moins un monomère bifonctionnel (a1) contenant des groupes aliphatiques de 12 à 70 atomes de carbone entre les groupes fonctionnels est utilisé,
(b) au moins un hydroxyde synthétique en forme de couche est fabriqué.

**14.** Utilisation d'une composition selon une ou plusieurs des revendications 1 à 12 en tant qu'agent de revêtement.

Figur 1

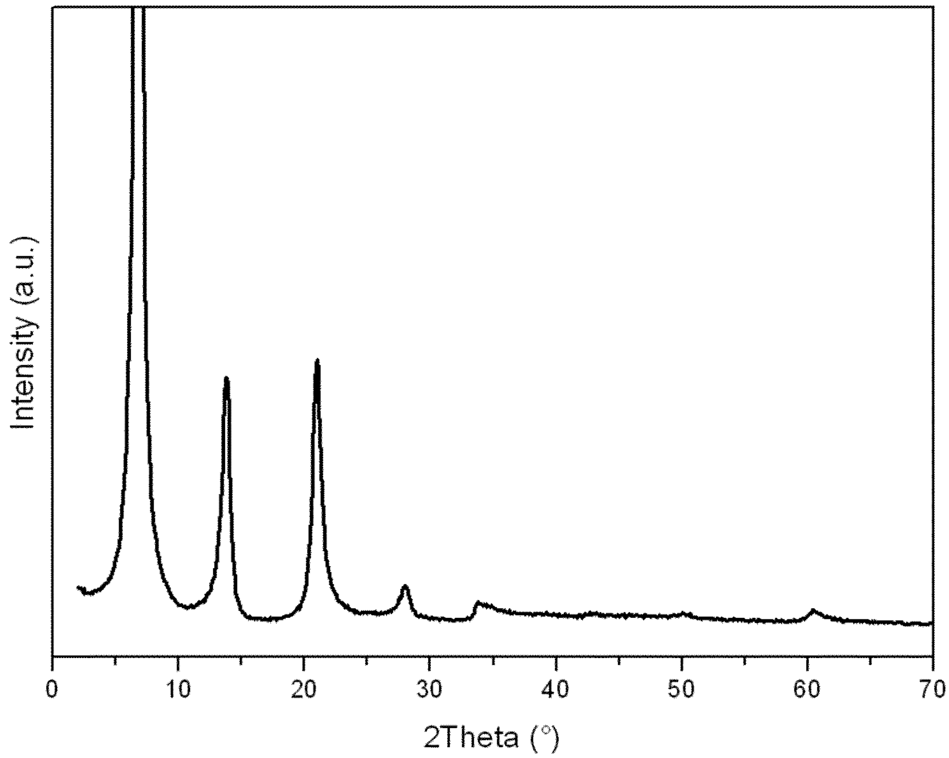


Figur 2

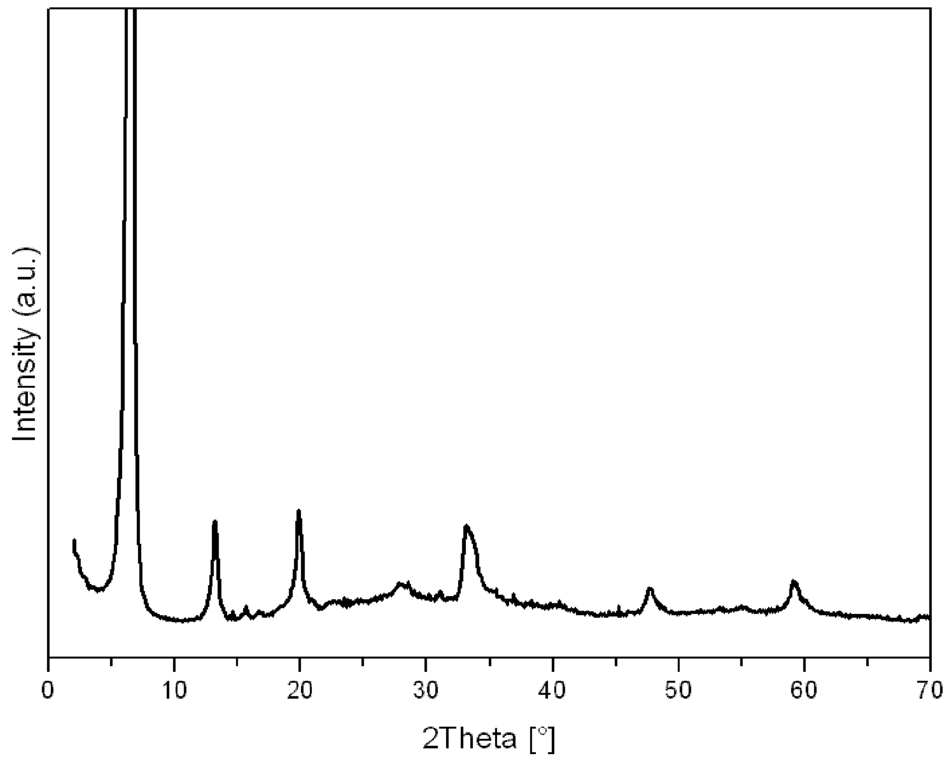

Figur 3

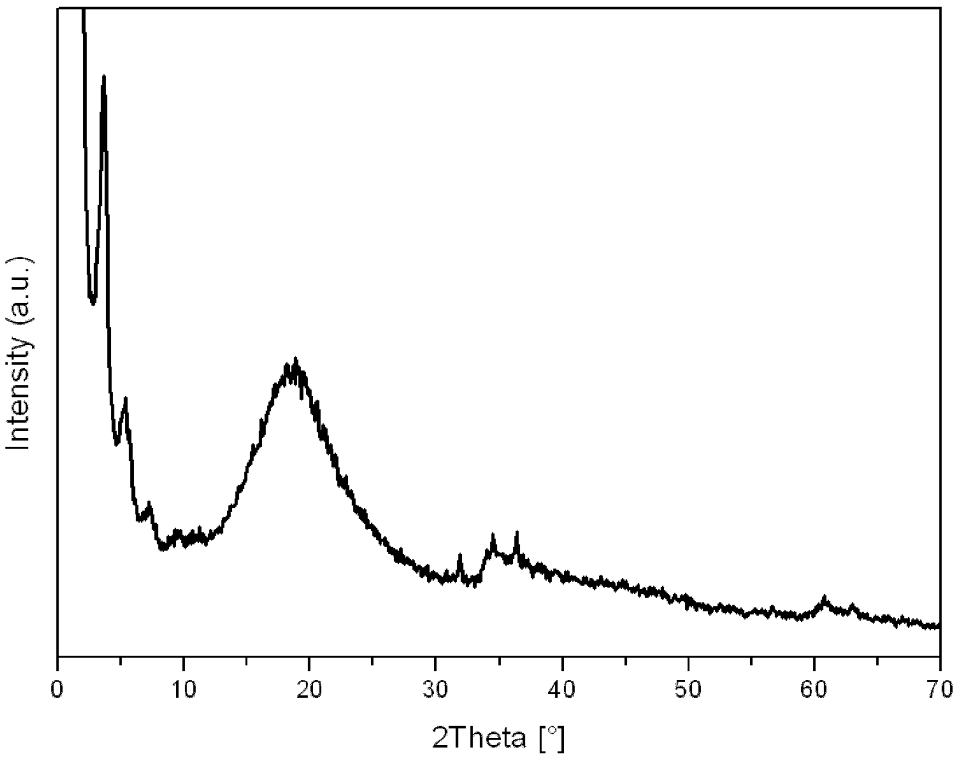


Figur 4

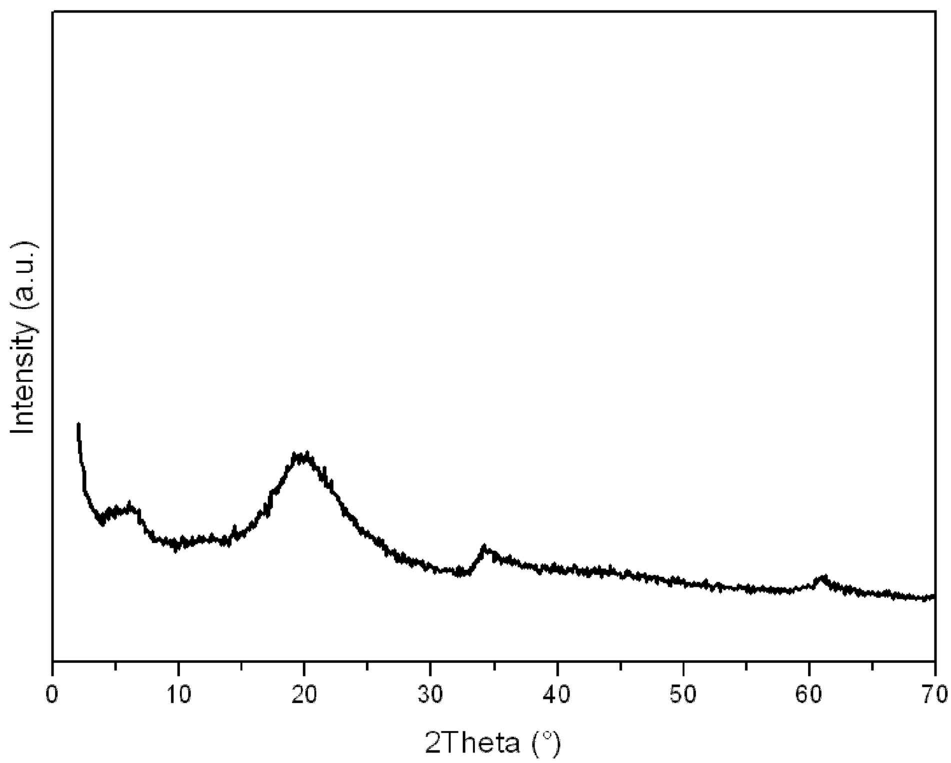

Figur 5

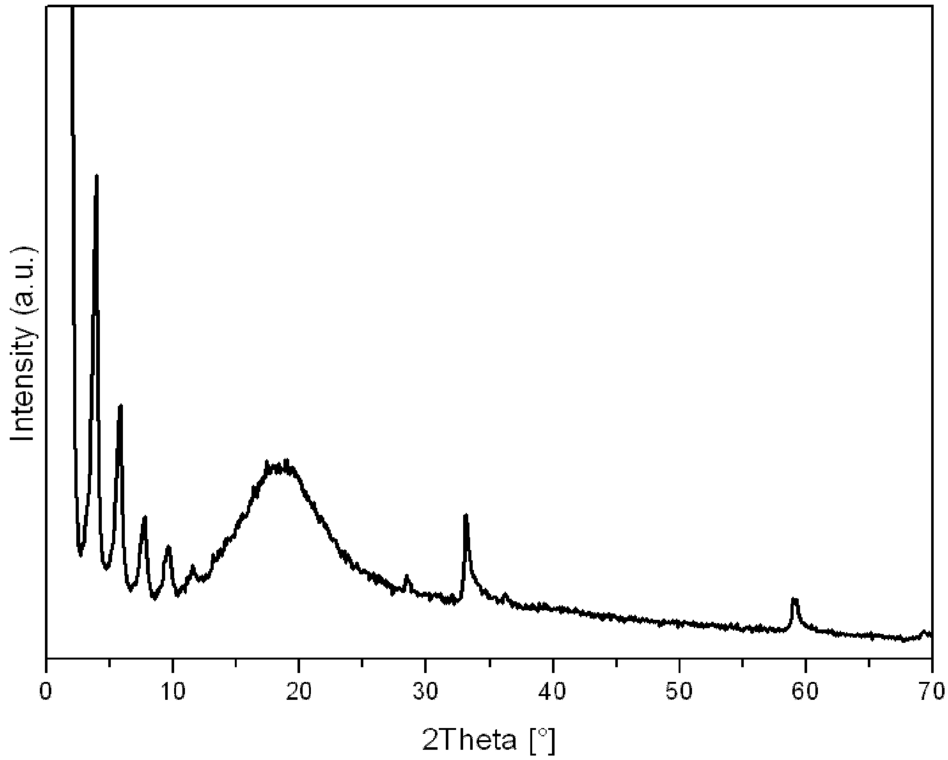


Figur 6

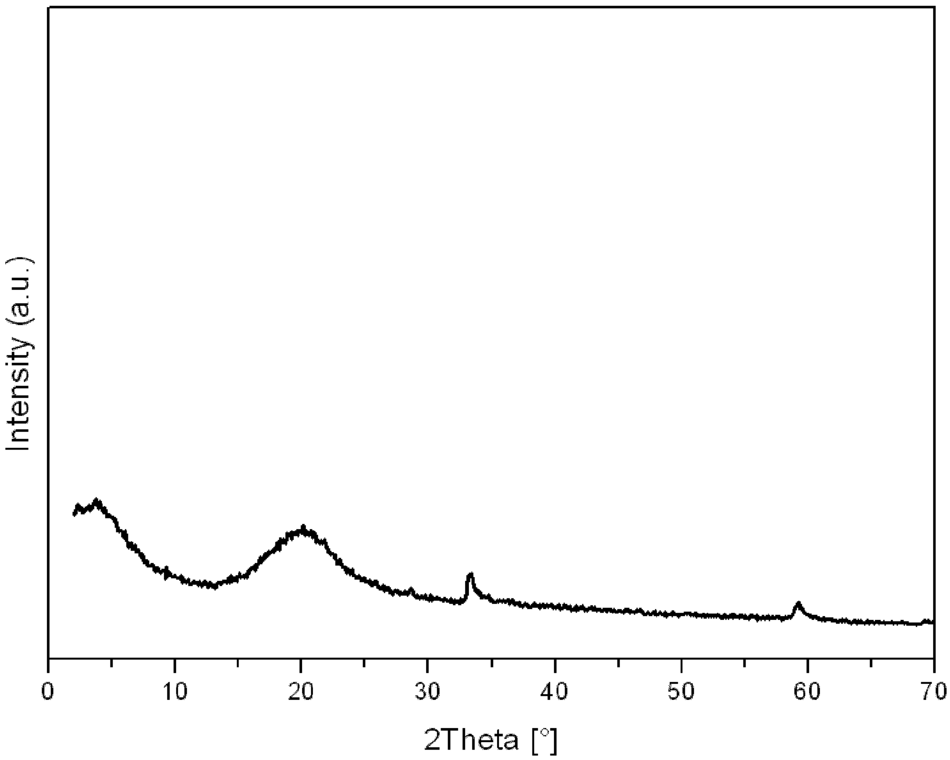

Figur 7

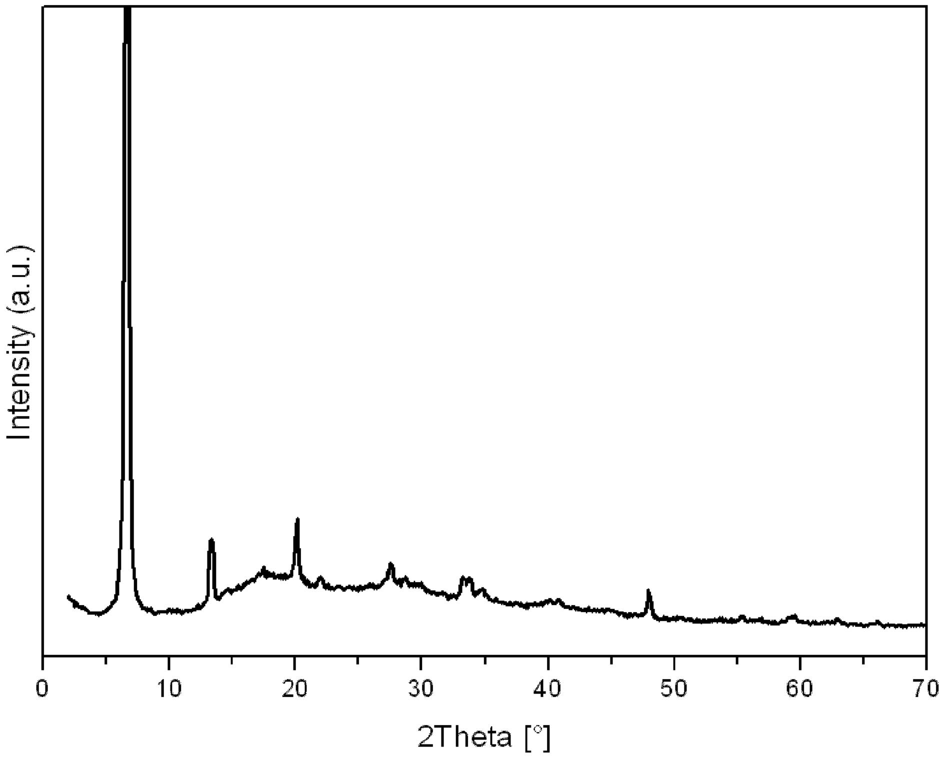


Figur 8

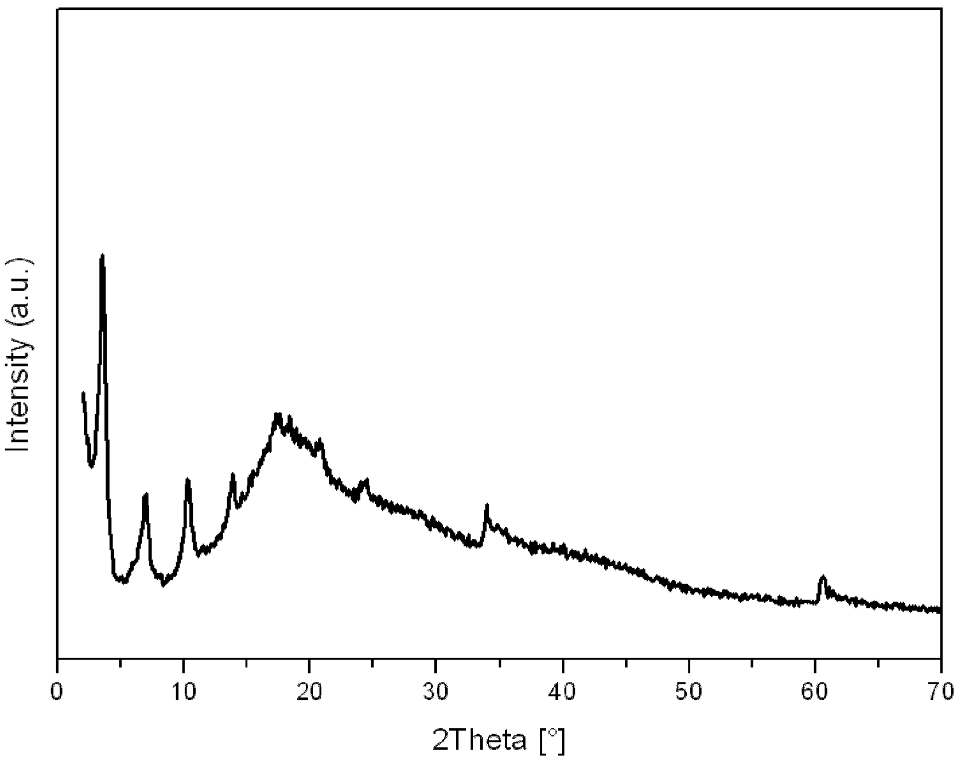

Figur 9

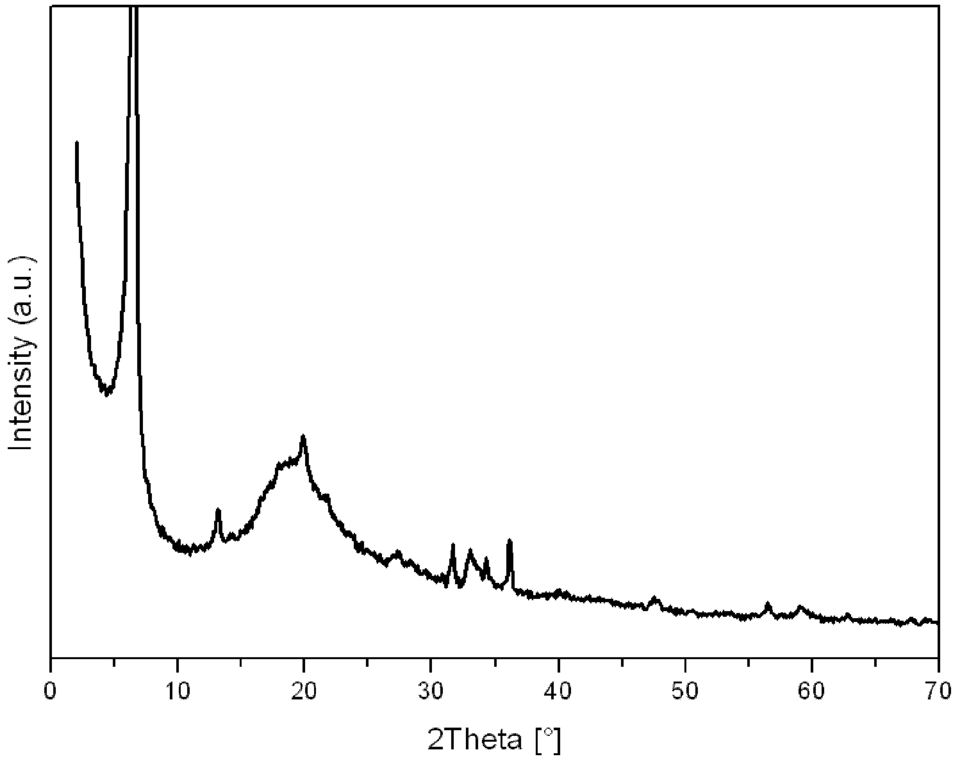


Figur 10

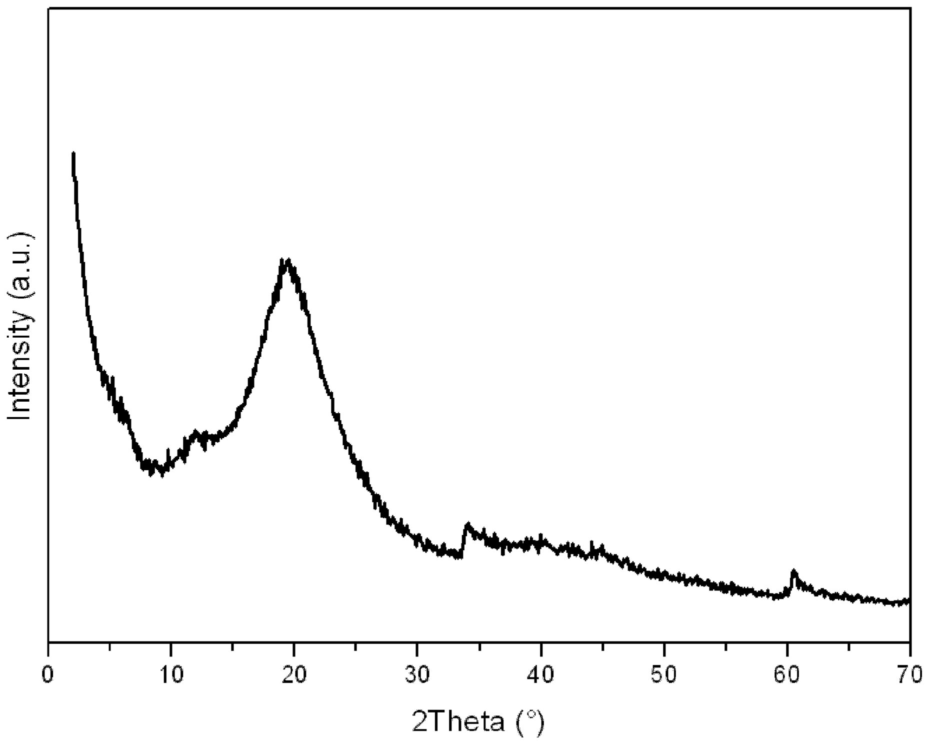

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03102085 A
- EP 0282619 A1
- WO 2005003408 A2
- WO 2009062621 A1
- WO 2010130308 A1
- WO 2010130309 A1


### In der Beschreibung aufgeführte Nicht-Patentliteratur


- *ECS Transactions,* 2010, vol. 24 (1), 67-76
- **E. KANEZAKI.** Preparation of Layered Double Hydroxides in Interface Science and Technology. Elsevier, 2004, vol. 1, 345 ff
- Preparation of Layered Double Hydroxides. **D.G. EVANS.** Struct Bond. Springer, 2005, vol. 119, 89-119
- **POUL et al.** *Chem. Mater.,* 2000, vol. 12 (10), 3123-3132